# EUROPEAN PATENT SPECIFICATION

(11) **EP 4 372 664 B1**
(45) Date of publication and mention of the grant of the patent: **04.11.2026**
(21) Application number: 22849481.1
(22) Date of filing: 26.07.2022
(51) Int. Cl.: G06Q 40/00

(54) **INFORMATION PROCESSING DEVICE**
INFORMATIONS VERARBEITUNGS VORRICHTUNG
DISPOSITIF DE TRAITEMENT D'INFORMATIONS

(30) Priority: 30.07.2021 JP 2021125975
(43) Date of publication of application: 22.05.2024
(73) Proprietor: Compliance Data Lab, Inc., Tokyo 100-0005 (JP)
(72) Inventor: YAMAZAKI Hirofumi, Tokyo 100-0005 (JP); KASAI Mayako, Tokyo 100-0005 (JP)
(74) Representative: Meissner Bolte Partnerschaft mbB
(86) International application number: PCT/JP2022/028759
(87) International publication number: WO 2023/008420

(56) References cited:
- WO-A2-01/67281
- JP-A- 2006 260 118
- US-A1- 2018 225 389
- US-A1- 2018 225 389
- MARTYNOVA M ET AL: "Spillover of corporate governance standards in cross-border mergers and acquisitions", JOURNAL OF CORPORATE FINANCE, NORTH-HOLLAND, AMSTERDAM, NL, vol. 14, no. 3, 1 June 2008 (2008-06-01), pages 200 - 223, XP022708643, ISSN: 0929-1199, [retrieved on 20080408], DOI: 10.1016/J.JCORPFIN.2008.03.004

## Description

### TECHNICAL FIELD

The present invention relates to an information processing device.

### BACKGROUND ART

In recent years, anti-money laundering, regulations in security trade management, or penalties are being made stricter around the world, and laws are being implemented even in Japan under an international framework. According to these laws, in Japan, relative to a specific business operation of which financial institutions are representative, when dealing with corporations, Ultimate Beneficial Ownership (UBO) information must be declared (for example, refer to Patent Document 1). Based on this, information service companies have been established which provide UBO information of corporations required by customers.

### Citation List

### Patent Document

Patent Document 1: Japanese Unexamined Patent Application, Publication No. 2019-36098

Document US 2018/0225389 A1 also discloses an information processing system dealing with the extraction and provision of similar kind of information.

### DISCLOSURE OF THE INVENTION

### Problems to be Solved by the Invention

The information service company constructs a database (DB) for providing UBO information, and provides the UBO information as a service, by extracting the necessary UBO information from the constructed DB. However, the definition of UBO is not the same for all countries. The DB constructed by the information service company is installed so as to be able to extract UBO information in accordance with the definition of the country assumed for provision of the service, and UBO information cannot be appropriately extracted with a definition different from the assumed country. For this reason, in the case of providing UBO information with a definition different from that assumed of the DB, conventionally, such matters of specifying the UBO have been carried out by extracting information of records related to a target corporation from the DB (hereinafter "corporation information"), and having an employee confirm the extracted corporation information.

Normally, the records of the DB exist as many as shareholder (beneficiary) amounts for every corporation. For this reason, many corporations each have a plurality of records. Not a few corporations exist, each of which has many records. In addition, it is necessary to consider the capital ties to specify the UBO. In other words, when specifying the UBO, it is often the case that it is also necessary to confirm the records not only of the target corporation, but also of other corporations which are the shareholder of the target corporation, and yet other corporations which are shareholders of these other corporations.

Based on this, in order to specify the UBO of one target corporation, it is common that the employee needs to confirm many records. For this reason, the actual situation is that there are also many cases of taking a very long time in the specification of UBO with a definition which is not assumed in the DB.

Due to such a flaw, an option may be considered, in which a DB is prepared newly for the country of the definition not assumed in the DB. However, a great amount of cost and a long period of time are both necessary simply in collecting information on the corporations as needed. For this reason, it has been considered desirable to use existing DBs so as also to enable starting provision of the service earlier.

Therefore, the present invention has an object of providing an information processing device capable of extracting the appropriate UBO information with several different definitions while using existing DBs.

### Means for Solving the Problems

An information processing device according to an aspect of the present invention includes: a first acquisition unit for acquiring corporate enterprise designation information which designates a first corporate enterprise that is a corporate enterprise to provide leader information, which is information of a substantial leader; a second acquisition unit for acquiring, in addition to corporate enterprise identification information which can uniquely identify a target corporate enterprise which is a corporate enterprise serving as a target specified based on the corporate enterprise designation information acquired by the first acquisition unit, corporate enterprise information having beneficiary-related information which at least includes beneficiary information expressing a beneficiary of the target corporate enterprise, and ownership ratio information expressing an ownership ratio of shares of the target corporate enterprise by the beneficiary; a benefit rate specification unit for specifying a benefit rate according to a definition of an assumed designated country, by referencing the corporate enterprise information acquired by the second acquisition unit; and an extraction unit for specifying the beneficiary that is the substantial leader of the first corporate enterprise based on the corporate enterprise information acquired by the second acquisition unit and a benefit rate specified by the benefit rate specification unit, and extracting at least part of the beneficiary-related information corresponding to the beneficiary specified as the beneficiary information.

### Effects of the Invention

The present invention provides an information processing device capable of extracting UBO information appropriate for a plurality of different definitions using existing DBs.

### BRIEF DESCRIPTION OF THE DRAWINGS

Fig. 1 is a diagram for explaining an outline of an example of a service provided by an information service company by way of an AP server according to an embodiment of an information processing device of the present invention;
Fig. 2 is a diagram for explaining an example of a system constructed for provision of a service by way of the AP server according to an embodiment of an information processing device of the present invention, and a network environment to which this system is connected;
Fig. 3 is a block diagram showing an example of a hardware configuration of the AP server according to an embodiment of an information processing device of the present invention;
Fig. 4 is a functional block diagram showing an example of the functional configuration realized on the AP server according to an embodiment of an information processing device of the present invention;
Fig. 5 is a diagram showing an example of the capital ties of a corporation;
Fig. 6 is a diagram for explaining an example of corporate enterprise information extracted by a corporation;
Fig. 7A is a flowchart showing an example of UBO specification processing;
Fig. 7B is a flowchart showing an example of UBO specification processing;
Fig. 8 is a diagram for explaining a configuration example of country-classified corporate enterprise information;
Fig. 9 is a diagram for explaining a content example of files to be delivered;
Fig. 10 is a diagram for explaining an example of a system constructed for the provision of services by an AP server according to a modified example of one embodiment of an information processing device of the present invention, and a network environment to which this system is connected;
Fig. 11 is a diagram for explaining an example of a system constructed for the provision of services by an AP server according to a second embodiment of an information processing device of the present invention, and a network environment to which this system is connected;
Fig. 12 is a functional block diagram showing an example of the functional configuration realized on the AP server according to the second embodiment of the information processing device of the present invention;
Fig. 13 is a flowchart showing an example of UBO specification processing of the second embodiment;
Fig. 14 (continuation 1) is a flowchart showing an example of UBO specification processing of the second embodiment; and
Fig. 15 (continuation 2) is a flowchart showing an example of UBO specification processing of the second embodiment.

### PREFERRED MODE FOR CARRYING OUT THE INVENTION

Hereinafter, modes for realizing the present invention will be explained while referencing the drawings. It should be noted that the embodiments to be explained are ultimately only examples, and the technical scope of the present invention is not to be limited thereto. Various modified examples may be also encompassed by the technical scope of the present invention.

### (First Embodiment)

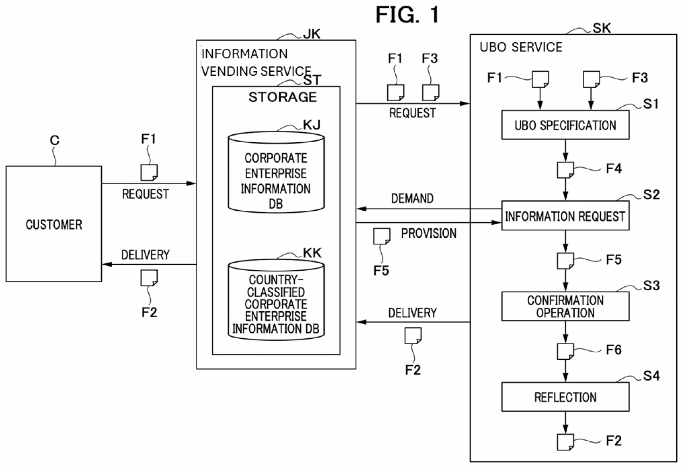

Fig. 1 is a diagram for explaining an outline of a service provided by an information service company by way of an AP (Application) server according to a first embodiment of an information processing device of the present invention.

An information service company SK performs a service of providing UBO (Ultimate Beneficial Ownership) information of a corporation wanted by a customer C, in collaboration with an information providing company JK (hereinafter noted as "present service"). The customer C is mainly a specific business operator for which declaration of UBO information is mandatory by law. Specific business operator is more specifically a financial institution, finance lease business operator, credit card business operator, casino business operator, real estate brokerage or the like. UBO indicates a person having a relationship that enables substantial control of the business management of a corporation, and what kind of person falls under this is determined in accordance with the nature of the corporation. Herein, corporation encompasses national and local governments in addition to corporate enterprises. In other words, "corporation" is used herein to indicate people other than individuals.

The information providing company JK processes a request from the customer C, and requests the information service company SK to extract UBO information. According to this request, the information service company SK performs specification of UBO with the designated corporation (hereinafter noted as "target corporation"), and delivers this specification result as a commodity to the information providing company JK. The information providing company JK delivers this specification result to the customer C. Under the circumstances, the information providing company JK functions as a front end, and the information service company SK functions as a back end.

The specified UBO is strictly a UBO candidate. Herein, unless specified otherwise, UBO refers to a UBO candidate. The information providing company JK is equipped with storage ST in which a corporate enterprise information DB (Data Base) KJ and country-classified corporate enterprise information DBKK are constructed. This storage ST includes sufficient volume for the storage of the corporate enterprise information DBKJ and the country-classified corporate enterprise information DBKK. It may be configured so as to secure this volume by a plurality of storage units ST. In other words, the number of storage units ST, volume of each storage unit ST, etc. are not particularly limited.

The corporate enterprise information DBKJ, for example, is an existing DB provided from an information company which provides UBO information, and is constructed so that UBO information is extractable. This information company is a company which provides a service in Europe, for example, and the corporate information is in English, for example. The definition of UBO is also in accordance with Europe.

This information company standardizes the information of corporations targeting corporations around the world, and assigns a corporate enterprise code to the standardized information, and stores this collectively in one record. Each record also stores information related to one shareholder (beneficiary) of the corresponding company in order to enable provision of UBO information. Accordingly, the record of a shareholder's amount exists for each corporation in the corporate enterprise information DBKJ. Hereinafter, the information group stored in one record is noted as "corporate enterprise information". A corporate enterprise code in this corporate enterprise information is identification information capable of uniquely identifying a company.

For national and local governments and listed corporate enterprises, etc., it is sufficient to confirm only the personal identification information of an individual (representative, etc.) differing from other companies. That is to say, who is required a declaration substantially is a corporation classified separately from the national and local governments, listed corporate enterprises, etc. Such a corporation is mainly a corporate enterprise. This is the reason for naming the information group stored in one record of the corporate enterprise information DBKJ as "corporate enterprise information".

Corporate enterprises, etc. are not only newly established from time to time, but an established corporate enterprise, etc. may disappear. The name, address or leader (CEO (Chief Executive Officer), CFO (Chief Financial Officer), etc.) are also changed from time to time. The information company handles the establishment, disappearance, various changes, etc. of such corporate enterprises, and performs updating of the corporate enterprise information DBKJ. This is the reason why the corporate enterprise information DBKJ is a DB of high reliability.

When requesting the provision of UBO information, the customer C creates a list of target corporations for which the provision of UBO information is desired, for example, and sends a file F1 in which this list is stored to the information providing company JK. The list of this file F1 is assumed to have a corporation name, address and corporate enterprise code inputted as information for each corporation, for example. The corporate enterprise code is a corporate enterprise code that is used in the corporate enterprise information DBKJ. For this reason, input of the corporation name and address, or input of corporate enterprise code are demanded for the customer C with respect to each target corporation.

It may be possible that there are multiple corporations having the same corporation name. Similarly, there may also be cases where multiple corporations have registered the same address. Under these circumstances, the corporate name and address become essential information to be inputted when a corporate enterprise code is not inputted. Accordingly, a group of corporate name and address, and the corporate enterprise code all correspond to the corporate enterprise designation information in the present embodiment.

An employee of the information providing company JK confirms the received file F1, and specifies and inputs the corporate enterprise code of the corporation for which the corporate enterprise code is not inputted. The file F1 in which the corporate enterprise code is inputted is sent to the information service company SK, and so the extraction of UBO information is requested. In order to enable extraction of UBO information, the information providing company JK performs searching of the corporate enterprise information DBKJ with the corporate enterprise code as a key, and at least extracts records storing this corporate enterprise key, i.e. corporate enterprise information. In addition to referencing the extracted corporate enterprise information, it may be sometimes necessary to extract corporate enterprise information which is assumed to be necessary to extract UBO information. The extraction of this corporate enterprise information is performed considering capital ties. The corporate enterprise information thus extracted is compiled into a file, and sent as a file F3 to the information service company SK together with the file F1.

It should be noted that the corporate enterprise information in the file F3 may be bundled alternatively into the file F1, for example. In other words, the file sent to the information service company SK from the information providing company JK upon requesting the extraction of UBO information may be only one file, that is, the file F1.

Referencing the files F1 and F3, the information service company SK specifies the UBO of the target corporation designated by the customer C, and subsequently extracts the UBO information of the specified UBO (Step S1). The extracted UBO information is compiled as a file F4.

The corporate enterprise information DBKJ is a database in accordance with the definition of UBO in Europe, for example. It may be possible that part of the information used in determination of UBO in the corporate enterprise information is inappropriate content in the definition of different countries such as Japan. Accordingly, in the specification of UBO in accordance with the definition in Japan, the information which is inappropriate content in Japan is confirmed in accordance with the definition in Japan. In this manner, it is configured so as to confirm the contents of information not meeting the definition, while referencing the information following the definition in Japan among the corporate enterprise information stored in the corporate enterprise information DBKJ as is, and then use this confirmation result in the specification of UBO. Accordingly, it is possible to perform specification of UBO complying with the definition in Japan by referencing the corporate enterprise information DBKJ which is not created in accordance with the definition in Japan. In the case of performing the specification of UBO complying with the definition in Japan, using the corporate enterprise information DBKJ, Japan corresponds to the designated country.

The corporate enterprise DBKJ is an existing database. By adopting such corporate enterprise information DBKJ, both the required cost and time for providing the present service can be drastically curbed compared with a case of newly creating a DB such as this corporate enterprise information DBKJ. Even if there is information not complying with the definition in Japan in the corporate enterprise information, it is possible to appropriately perform specification of UBO by confirming the contents of information not complying with this definition. Specification of UBO complying with a definition having a partial difference from the definition adopted in the corporate enterprise information and the definition in Japan can be performed similarly. The specification of UBO complying with the definition adopted in the corporate enterprise information can be performed by referencing the corporate enterprise information. As described above, confirming the contents of required information and adopting an existing DB such as the corporate enterprise information DBKJ are effective to further expand the usage of the existing DB and realize broader provision of services.

The language used in the corporate enterprise information DBKJ is English. The Japanese language often has many Japanese expressions for one English expression. For example, "Hiroshi" which is used as an individual name is also expressed in kanji in addition to hiragana. Many kanji expressions also exist therefor. There are many examples of the kanji expressions for "Hiroshi". People using different kanji even though the pronunciation is the same are different individuals. For these reasons, the present service handles the provision of UBO information in Japanese when specifying UBO complying with the definition in Japan. The country-classified corporate enterprise information DBKK is a database prepared as a dictionary for this. Herein, language is used to indicate a language which is the official language of a country, unless otherwise specified.

As the information inputted using the country-classified corporate enterprise information DBKK as a dictionary, it includes a corporation name, individual name, address, etc. Herein, it is assumed that the inputted information includes only these three items to facilitate understanding. The address differs from the other two items, and one Japanese expression may often correspond to one English expression. However, the present service, , is also configured to provide the address in Japanese considering the convenience of the customer C.

It should be noted that the country-classified corporate enterprise information DBKK is sufficient so long as being prepared according to the country in which the present service is provided. This is because the provision of UBO information is desired almost in an expression in the language of the country (official language). However, it may be considered to provide UBO information in a language other than Japanese when a foreign corporate enterprise is a customer C. In addition to the Japanese language, many languages (for example, Mandarin Chinese) exist for which there are several expressions for one English expression. Accordingly, it may be desirable that the country-classification corporate enterprise information DBKK in a language other than Japanese is prepared to be able to handle the provision of UBO information in this language. Including Japanese, a country having an official language as a language for which there are often several expressions relative to one English expression is an assumed country or a candidate for an assumed country.

The country-classified corporate enterprise information DBKK, for example, is a database in which the name of a corporation and name of each shareholder of this corporation, etc. are compiled into one record of the information in the corresponding language expression, for every corporation. Corporate enterprise codes are also stored in this record so as to be able to uniquely specify corporations. Herein, the information group stored in one record is noted as "country-classification corporate enterprise information". In addition, the assumed language is noted as "target language". It should be noted that the configuration of the country-classification corporate enterprise information DBKK is not particularly limited. For example, the information of each shareholder may be respectively stored in one record.

The creation of the file F4 indicates that an individual or a corporation serving as a candidate of UBO has been specified. The individual is a shareholder of a target corporation or another corporation having a capital tie with this target corporation. After creation of the file F4, the information service company SK sends the corporate enterprise code of the target corporation and also the corporate enterprise code of another corporation to the information providing company JK, and requests the provision of country-classified corporate enterprise information corresponding to the sent corporate enterprise codes (Step S2). For specifying the target language, a country code or an identification code etc. is sent together, where the identification code is assigned to this request and notified at the time of request to the information service company SK from the information providing company JK.

According to this request, the information providing company JK extracts the country-classified corporate enterprise information storing this corporate enterprise code, by searching the country-classified corporate enterprise information DBKK with the corporate enterprise code received from the information service company SK. The extracted country-classified corporate enterprise information is compiled into a file, which is provided to the information service company SK as a file F5.

The information service company SK stores the file F5 having been provided in this manner (Step S2). Reception and storage of this file F5 are both included in Step S2. The information service company SK performs specification of the target language expressions corresponding to each of the corporate name and individual name by referencing the files F4 and F5, and generates a screen to allow an employee to confirm and correct the specified correspondence. With generating the screen as described above, the employee is allowed to perform not only confirmation of whether the corporation name and individual name of the target language expression automatically associated are appropriate, but also correction of places determined not to be appropriate. By such a confirmation operation, the corporation name and individual name are decided. This decision results are compiled into a file, and created as a file F6 (Step S3). It should be noted that the specification of the target language expression can be performed using a known mechanical translation technique and technique of natural language processing.

The created file F6 is part of the UBO information to be provided to the customer C. The information service company SK reflects the contents of the file F6 on, in other words combines into the file F4 (Step S4). This combination results in a file F2 to be delivered to the customer C. The information service company SK delivers the file F2 to the information providing company JK. It should be noted that various checks are actually performed on the file F2 until delivered. In other words, the file F2 passes various checks and is delivered from the information service company SK to the information providing company JK.

The information providing company JK delivers the file F2 sent from the information service company SK to the customer C. In this manner, the present service references the corporate enterprise information in the corporate enterprise information DBKJ and specifies the target corporation UBO, when the customer C requests the provision of UBO information of each target corporation designated in the file F1. Furthermore, the present service references the country-classified corporate enterprise information in the country-classified corporate enterprise information DBKK using the UBO specification results and converts the UBO information into the target language, on an as-needed basis. Accordingly, the present service appropriately specifies UBO in accordance with a different definition than Europe and provides the UBO information in a language desirable for the customer C.

It should be noted that the information service company SK inherently acquires the required corporate enterprise information and country-classified corporate enterprise information from the information providing company JK. However, It may alternatively be possible to have at least one of the corporate enterprise information DBKJ and country-classified corporate enterprise information DBKK kept in the information service company SK. It may be possible that the target corporation for which UBO information is necessary is not designated in the form of a list in the file F1, but instead designated on a screen (Web page) sent by the information providing company JK. It may be desirable that countries to be assumed in the specification of UBO are designable on this screen, so that multiple countries are treatable. In addition, it may be possible that the present service is not provided by the information providing company JK but instead provided directly to the customer C. Including such alternatives, various modifications may be applicable to how to provide the present service.

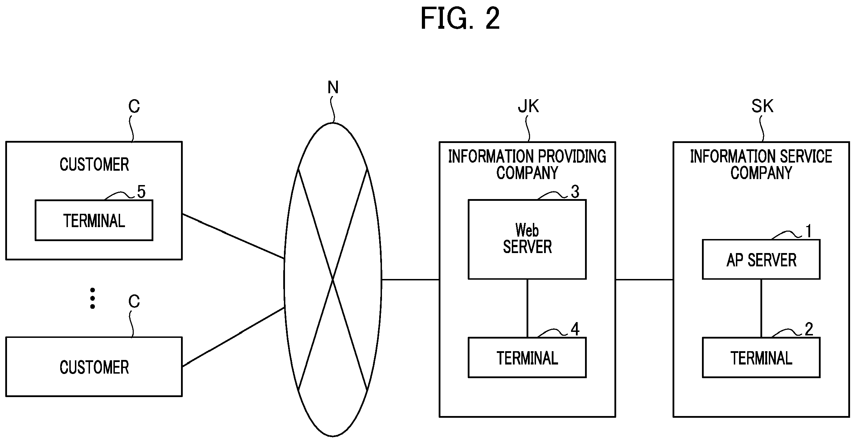

Hereafter, it will be described in detail how the present service illustrated in Fig. 1 is implemented while referencing Figs. 2 to 9. Fig. 2 is a view for explaining an example of a system constructed for providing a service by way of an AP service according to the first embodiment of the information processing device of the present invention, and a network environment to which this system is connected.

The system in which a terminal 2 and an AP server 1 according to the present invention are connected with each other by way of a LAN (Local Area Network), for example, is constructed in the information service company SK, as shown in Fig. 2. A system in which a Web server 3 and a terminal 4 are connected with each other by way of a LAN, for example, is constructed in the information providing company JK. In both the information service company SK and information providing company JK, the terminals 2 and 4 are terminals used by employees, etc., and usually a plurality of units are present. Herein, only one unit is shown for convenience. It should be noted that the AP server 1 may be a server provided by a cloud service. Accordingly, the owner of an AP server 1 and installation location thereof, etc. are not particularly limited. This applies similarly to the Web server 3 described later.

The Web server 3, which is a server that processes a request sent from the customer C, is connected with a network N. A terminal 5 used by each customer C is connectable to this network N. The customer C accordingly uses the service provided by the Web server 3 by connecting the terminal 5 to the Web server 3 via the network N. Hereafter, in order to avoid confusion, each terminal 2, 4 and 5 is respectively noted as "processing-side terminal 2", "reception-side terminal 4" and "customer-side terminal 5". It is assumed that only employees are using any of the terminals.

The processing-side terminal 2 is an information processing device which is usable in the confirmation operation shown as Step S3 in Fig. 1. The reception-side terminal 4 is an information processing device which is usable in the specification and input of the corporate enterprise code assigned to a target corporation designated by the customer C with a corporate name and address. The customer-side terminal 5 is an information processing device which enables utilization of various services provided via the network N. These are all information processing devices equipped with a communication function such as a PC (Personal Computer) or tablet PC, for example.

The information service company SK and information providing company JK are connected with each other via a dedicated line, for example. In the case of connection via a dedicated line, nodes enabling communication via the dedicated line are present in both the information service company SK and information providing company JK. Fig. 2 does not illustrate such nodes for convenience. Herein, the Web server 3 and AP server 1 are assumed to be connected with each other via LAN or the like equipped with each of the information providing company JK and information service company SK.

A command of requesting provision of UBO information together with the file F1 is transmitted from the customer-side terminal 5 to the Web server 3 when a service provided by the Web server 3 is used. It may be configured so that this transmission is performed by an operation on a screen for the acceptance of a request (Web page) sent from the Web server 3 in response to a request from the customer-side terminal 5, for example. In this case, it may be configured so as to let an employee using the customer-side terminal 5 execute a click operation for a button instructing the provision of UBO information subsequent to attaching the file F1 on this screen, for example. In other words, it may be configured so as to send the attached file F1 and a command requesting the provision of UBO information from the customer-side terminal 5, according to this click operation. It should be noted that such a method of requesting a service is one example, and does not eliminate other methods. The method may be such as using mail, a file transfer service, or the like.

When the WEB server 3 receives the file F1 together with a command from the customer-side terminal 5, the Web server 3 notifies the reception-side terminal 4 of this event to and publishes the file F1 to be accessible. The Web server 3 thereby requests to an employee using any one of the reception-side terminals 4 for the content confirmation of the file F1 and input of the required corporate enterprise code. As a result, the file F1 received from the customer C undergoes content confirmation and is updated as necessary into what the required corporate enterprise code is inputted.

The corporate enterprise information DBKJ and country-classified corporate enterprise information DBKK are stored in a storage which is equipped with or connected to the Web server 3. The Web server 3 performs search of the corporate enterprise information DBKJ with the corporate enterprise code as a key after the content confirmation of the file F1 has been performed, and then extracts the corporate enterprise information required in the specification of UBO. Considering the capital ties, the search of corporate enterprise information DBKJ with the corporate enterprise code as a key is also performed as necessary for a corporation shown as a shareholder in the extracted corporate enterprise information, and the corporate enterprise information is further extracted. The extracted corporate enterprise information is compiled as the file F3 and sent from the Web server 3 to the AP server 1 together with a command for requesting extraction of UBO information. In addition to the file F3, the file F1 for which the corporate enterprise code has been inputted and a country code representing the designated country which is the country assumed for specifying UBO are also sent to the AP server 1.

The corporate enterprise information extracted from the corporate enterprise information DBKJ with the corporate enterprise code of the target corporation as a key enables specification of UBO in accordance with the definition in Europe. For this reason, the corporate enterprise information further extracted according to the corporate enterprise code of the corporate indicated as a shareholder, i.e. corporate enterprise information further extracted by focusing on the capital ties, is information which is unnecessary in the specification of UBO in accordance with the definition in Europe. However, it is necessary information in the specification of UBO in accordance with a designated country other than in Europe, for example, Japan. Accordingly, the present service also performs the extraction of corporate enterprise information according to the corporate enterprise code of another corporation specified from the capital ties.

There are differences in definition of UBO according to country other than those related to capital ties. For example, an individual defined as UBO in a corporate enterprise is an individual satisfying the condition of having an ownership ratio of stock 25% or more in Europe. However, in the United States of America, it is an individual satisfying the condition of this ownership ratio exceeding 25%. In order to appropriately specify UBO, it is also necessary to cope with such differences in definition.

The AP server 1 references the files F1 and F3 and specifies candidates for UBO of the target corporation. When the individual specified as a candidate of UBO is a shareholder of a corporation other than the target corporation, the corporate enterprise code of the corporation for which this individual is a shareholder is also specified. The AP server 1 saves the UBO specification results as the file F4 and sends the extracted corporate enterprise code to the Web server 3 together with the country code, for example. The AP server demands the corporate enterprise code and provision of the corporate enterprise code corresponding to the country code.

According to this demand, the Web server 3 performs search of the country-classified corporate enterprise information DBKK with the received corporate enterprise codes respectively as keys and extracts the country-classified corporate enterprise information demanded by the AP server 1. The country-classified corporate enterprise information DBKK serving as the target of the search is designated according to the country code. The Web server 3 organizes the country-classified corporate enterprise information extracted in this manner into a file F5 and sends it to the AP server 1.

The AP server 1 associates respective contents of the files F4 and F5 by corporate enterprise code, and specifies the name of the target corporation, further the corporation specified as UBO, or the language expression of the designated country establishing the name of an individual. Next, the AP server 1 creates a file F6 for confirming and correcting each name, using this specification result and a part of the respective contents of the files F4 and F5. And the AP server 1 creates a screen for a confirmation operation (Web page) using thus created file F6. After this creation, the AP server 1 performs processing to confirm each name for the employee who uses the processing-side terminal 2, for example.

According to this processing, access to the screen for the confirmation operation is enabled, and the employee using the processing-side terminal 2 is notified of the existence of a request requiring a confirmation operation of each name. As a result, the confirmation operation is performed by an employee capable of the confirmation operation, and the file F6 is updated according to the contents of this confirmation operation.

After the file F6 has been updated in this manner, the AP server 1 combines the contents of the updated file F6 with the file F4. By this combination, the file F4 is updated to a file F2 in which the UBO information is expressed in the language of the designated country. This file F2 is sent from the AP server 1 to the Web server 3, after undergoing check performed by yet another employee, e.g., an employee having authority to determine whether or not to deliver the file F2. Accordingly, this file F2 is to be sent via the Web server 3 to the customer C.

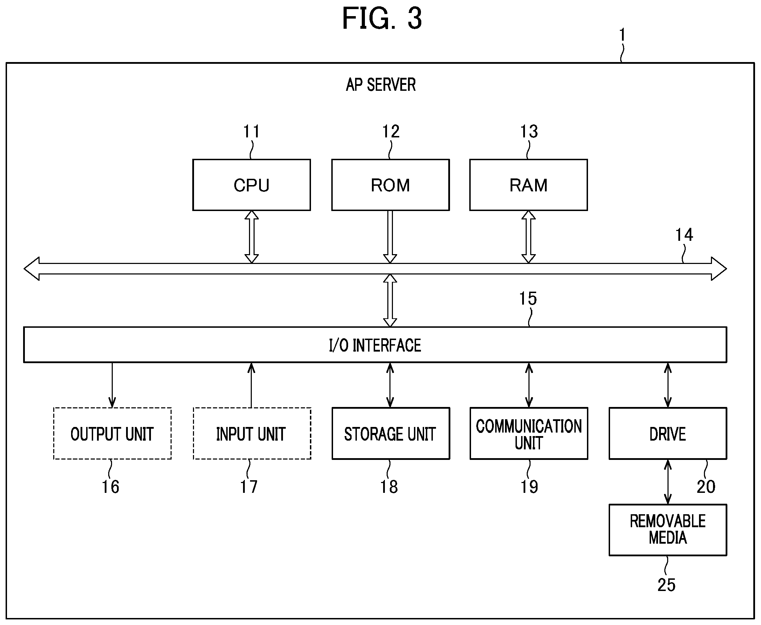

Fig. 3 is a block diagram showing an example of the hardware configuration of an AP server according to one embodiment of the information processing device of the present invention. Next, an example of hardware configuration of the AP server 1 will be specifically explained by referencing Fig. 3. It should be noted that this configuration example is one example, and the hardware configuration of the AP server 1 is not limited thereto.

The AP server 1 includes a CPU (Central Processing Unit) 11, ROM (Read Only Memory) 12, RAM (Random Access Memory) 13, bus 14, I/O interface 15, output unit 16, input unit 17, storage unit 18, communication unit 19 and driver 20.

The CPU 11 executes various processing in accordance with a program stored in the ROM 12 and/or a program loaded from the storage unit 18 to the RAM 13. The application program enabling a server to function as the AP server 1, i.e. application program developed for provision of the present service, is stored in the storage unit 18, for example. By the CPU 11 executing the application program subsequent to reading it out into the RAM 13, the AP server 1 can handle the request from the Web server 3.

The data, etc. required by the CPU 11 to execute various processing are stored appropriately in the RAM 13. Various programs executed by the CPU 11 are also included in these data. The CPU 11, ROM 12 and RAM 13 are mutually connected via the bus 14. In addition, the I/O interface 15 is also connected to this bus 14. The output unit 16, input unit 17, storage unit 18, communication unit 19 and drive 20 are connected to the I/O interface 15.

The output unit 16 includes a display such as liquid crystal display, for example. The output unit 16 displays various images according to the control performed by the CPU 11. The output unit 16 may be equipped with the AP server 1 or connected therewith as necessary. In other words, the output unit 16 is not an essential constituent element.

The input unit 17 is an element including various hardware buttons, etc. such as a keyboard, for example. This element may include one or more pointing devices such as a mouse. The operator can input various information via the input unit 17. This input unit 17 also may be equipped with the AP server 1 or connected therewith as necessary. In other words, the input unit 17 is not an essential constituent element.

The storage unit 18 is an auxiliary storage device such as a hard disk device or SSD (Solid State Driver), for example. Data of large volume is stored in this storage unit 18. The communication unit 19 enables communication between the Web server 3 and processing-side terminal 2 via the LAN.

The drive 20 is a device which such a removable media 25 is attachable to or detachable from as a magnetic disk, optical disk, magneto-optical disk or semiconductor memory card. The drive 20 is capable of reading information from and writing information into the removable media 25 installed, for example. Accordingly, the program recorded in the removable media 25 can be stored in the storage unit 18 via the driver 20. In addition, the removable media 25 installed in the drive 20 can be used as the destination of copying or moving various data stored in the storage unit 18.

The hardware resources equipped in such an AP server 1 are controlled by various programs including the application program. As a result, the AP server 1 can process the request from the Web server 3, perform specification of UBO according to the definition of the designated country, and perform provision of UBO information in the language expression of the designated country. The various programs include an OS (Operating System). The application program for providing the present service runs on this OS.

The application program developed for the present service may be stored in the removable media 25 and put into distribution. It may be configured to be distributable via a network such as the Internet. As described above, the medium recording the application program may be media which is equipped in or attached to the information processing device either directly or indirectly connected to the network, or media which is equipped in or attached to an externally accessible device. Hereafter, this application program is noted as "developed application" to distinguish from others.

It is possible to adopt a server, which has basically the same hardware configuration as the AP server 1, as the Web server 3. For this reason, a detailed explanation is omitted herein. However, it is necessary that a storage ST of sufficient volume is equipped as a storage unit constituting the Web server 3 so as to store the corporate enterprise information DBKJ and country-classified corporate enterprise information DBKK. This storage ST may be connected to the Web server 3. Herein, it is assumed that the storage ST is equipped in the Web server 3. In addition, the communication unit needs to have two units: one enabling communication via the network N; and the other enabling communication with the AP server 1.

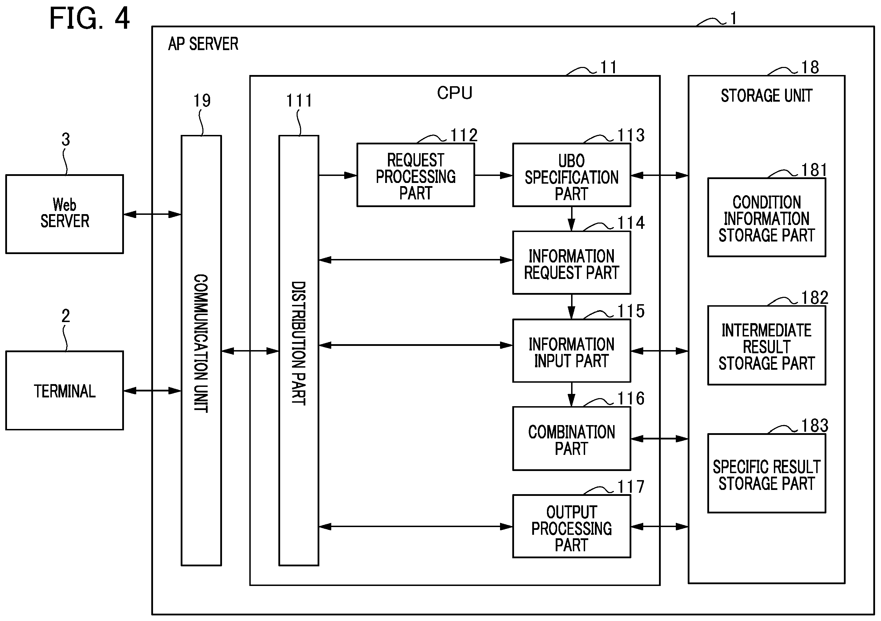

Fig. 4 is a functional block diagram showing an example of a functional configuration realized on the AP server according to an embodiment of the information processing device of the present invention. Next, an example of the functional configuration realized on the AP server 1 will be explained in detail while referencing Fig. 4.

On the CPU 11 of the AP server 1, a distribution part 111, request processing part 112, UBO specification part 113, information request part 114, information input part 115, combination part 116 and output processing part 117 are realized functionally as shown in Fig. 4. These functions are realized by the CPU 11 executing various programs including the above-mentioned development application. As a result, a condition information storage part 181, intermediate result storage part 182 and specification result storage part 183 are secured for information storage in the storage unit 18.

The distribution part 111 performs exchange of data with the communication unit 19, specifies an output destination to transfer the data inputted from the communication unit 19, and transfers the data to the specified output destination. The output destination of transferring data is any among the request processing part 112, information request part 114, information input part 115 and output processing part 117. As a result of the distribution part 111 transferring the data to the proper output destination, the functions required in processing of this data operate.

The request processing part 112 processes a request for extraction of UBO information sent from the Web server 3. The files F1, F3 sent with this request and the country code are transferred from the distribution part 111 to the request processing part 112. These files F1, F3 and country code are transferred from the request processing part 112 to the UBO specification part 113. This request processing part 112 corresponds to the first acquisition unit and second acquisition unit in the narrow sense of the present embodiment.

The UBO specification part 113 references the files F1 and F3, and specifies the UBO in accordance with the definition of the designated country represented by the country code, for each target corporation designated by the file F1. For specification of UBO, the UBO specification part 113 references condition information stored in the condition information storage part 181 secured in the storage unit 18. This condition information is information prepared for each country or each definition, and represents the contents such as conditions of UBO defined by each country assumed. Accordingly, the UBO specification part 113, which references the condition information, actually is also able to specify UBO in accordance with the definition of a country other than Europe and Japan. The country code is used to specify proper condition information to be referenced in the condition information. This UBO specification part 113 corresponds to a benefit rate specification unit and extraction unit of the present embodiment.

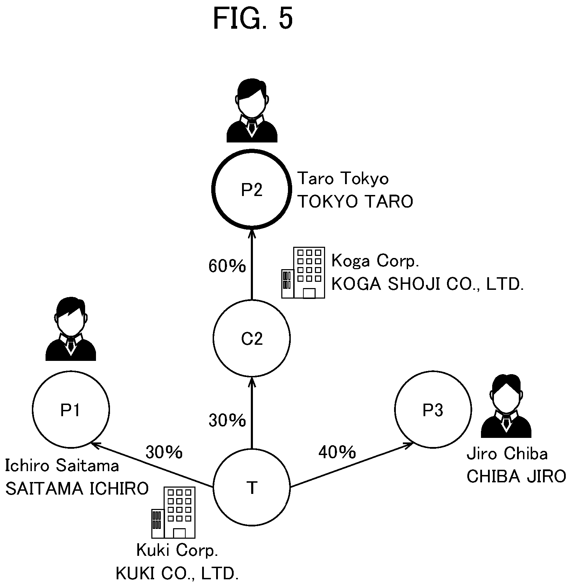

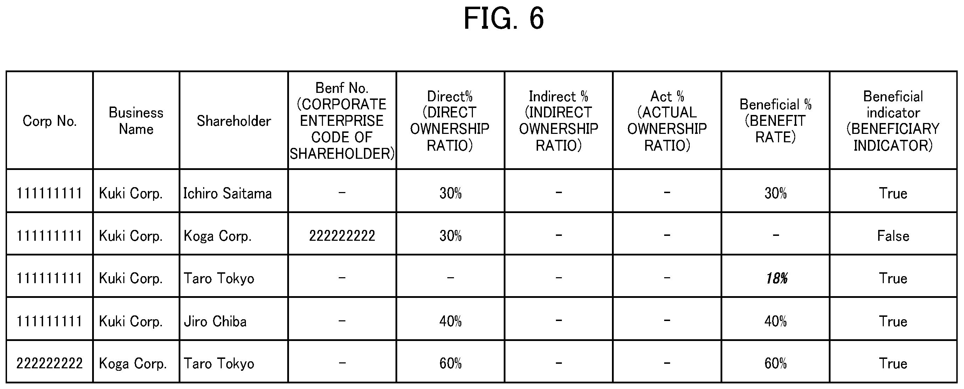

Fig. 5 is a diagram showing an example of capital ties of one corporation. Fig. 6 is a diagram for explaining an example of corporate enterprise information extracted by one corporation. The example of corporate enterprise information shown in Fig. 6 corresponds to a case in which one corporation having the capital ties shown in Fig. 5 is the target corporation. Herein, a UBO specification method performed by the UBO specification part 113 will be specifically explained when the designated country is Japan, by referencing Figs. 5 and 6.

In the example shown in Fig. 5, Kuki Co., Ltd. (English notation: Kuki Corp.) is a target corporation T. As shareholders investing capital directly into this Kuki Co., Ltd., "Saitama Ichiro" (English notation: Ichiro Saitama), "Koga Shoji Co., Ltd." (English notation: Koga Corp.) and "Chiba Jiro" (English notation: Jiro Chiba) exist. In Fig. 5, "Saitama Ichiro" is represented by P1, "Koga Shoji Co., Ltd." is represented by C2, and "Chiba Jiro" is represented by P3 (English notation: Jiro Chiba). The direct ownership ratios of these shareholders are 30%, 30% and 40%, respectively.

As a shareholder of Koga Shoji Co., Ltd., "Tokyo Taro" (English notation: taro Tokyo) exists. The direct ownership ratio of this shareholder is 60%. In the target corporation for which such capital ties exist, a total of five corporate enterprise information sets are extracted, as shown in Fig. 6. In Fig. 6, all four of the above are corporate enterprise information sets which are extracted when the UBO is specified in accordance with the definition of Europe. The corporate enterprise information at the bottom is corporate enterprise information extracted in order to specify UBO in accordance with the definition in Japan.

Fig. 6 shows an excerpt of a particularly important portion in UBO specification of the corporate enterprise information. The excerpted portion, as shown in Fig. 6, includes the respective information of: a corporate enterprise code (English notation in figures: Corp NO.), business name (company name) (English notation in figures: Business Name), shareholder name (English notation in drawings: Shareholder), corporate enterprise code of shareholder (English notation in drawings: Benef No.), direct ownership ratio (English notation in drawings: Direct%), indirect ownership ratio (English notation in drawings: Indirect%), actual ownership ratio (English notation in drawings: Act%), benefit rate (English notation in drawings: Beneficial%), and beneficiary indicator (English notation in drawings: Beneficial Indicator). In these information sets, the corporate enterprise code corresponds to the corporate enterprise identification information of the present embodiment. In addition, the shareholder name and the corporate enterprise code of the shareholder correspond to beneficiary-related information in the present embodiment. This beneficiary-related information will be noted hereafter as "shareholder information".

Direct ownership ratio, indirect ownership ratio and actual ownership ratio, which are all information that is used in the specification of UBO or calculation of benefit rate, correspond to ownership ratio information in the present embodiment. The benefit rate, and beneficiary indicator are also information that can be used in the specification of UBO. These or the benefit rate correspond to the benefit rate information in the present embodiment. The beneficiary indicator is information representing whether a shareholder who is a beneficiary can be UBO.

"True" and "False" which are notations in Fig. 6 respectively represent an eligible UBO and ineligible UBO. The beneficiary information and ownership ratio information all correspond to beneficiary-related information in the present embodiment. The corporate enterprise information in the present embodiment includes corporate enterprise identification information, benefit rate information, shareholder name, etc. in addition to the beneficiary-related information.

"Tokyo Taro" who is a shareholder of Koga Shoji Co., Ltd. is not a direct shareholder of Kuki Co., Ltd., as shown in Fig. 5. However, "Tokyo Taro" has a capital tie with Kuki Co., Ltd. through Koga Shoji Co., Ltd. For this reason, "Tokyo Taro" is regarded as a beneficiary of Kuki Co., Ltd., and the corporate enterprise information is extracted, as shown in Fig. 6.

In the corporate enterprise information with respect to "Tokyo Taro" as a beneficiary, the direct ownership ratio, indirect ownership ratio and actual ownership ratio are all 0%, or no information thereof exists. However, there exists the benefit rate of 18% which is calculated from the direct ownership ratio of Koga Shoji Co., Ltd. and direct ownership ratio of Kuki Co., Ltd. owned by this Koga Shoji Co., Ltd., since capital is invested in Koga Shoji Co., Ltd. which owns shares of Kuki Co., Ltd.

This numerical value of 18% is calculated according to the definition (standard) in Europe. The calculation method of this numerical value differs from the definition (standard) in Japan. In other words, in the European standard of this example, using the direct ownership ratio of Kuki Co., Ltd. owned by Koga Shoji Co., Ltd. and direct ownership ratio of Koga Shoji Co. owned by "Tokyo Taro", the benefit rate is calculated: benefit rate= direct ownership ratio of Kuki Co., Ltd. x direct ownership ratio of Koga Shoji Co., Ltd. = 30% x 60% = 18%. In contrast, in the Japanese standard, the benefit rate is calculated: benefit rate = direct ownership ratio of Kuki Co., Ltd. x 100%= 30% x 100% = 30%.

An individual owning more than 50% share of a corporation can theoretically make their own decisions in this corporation. Accordingly, in the Japanese standard, a corporation in which the individual owns more than 50% share is regarded as a corporation in which this individual owns all shares. In this manner the benefit rate is calculated assuming that the direct ownership ratio is substantially 100%. Accordingly, the benefit rate calculated based on the Japanese standard basically does not meet that based on the European standard which does not adopt a substantial direct ownership ratio.

In the Japanese standard of calculating the benefit rate as mentioned above, it is necessary to trace the capital ties of one corporation of which individual is regarded as UBO, and confirm the beneficiary of another corporation which invests capital directly or indirectly into the one corporation. The corporate enterprise information at the bottom in Fig. 6, which is corporate enterprise information of Koga Shoji Co., Ltd., is corporate enterprise information actually extracted for this purpose. By referencing this corporate enterprise information, it is possible to confirm the actual benefit rate of Kuki Co., Ltd. owned by "Tokyo Taro".

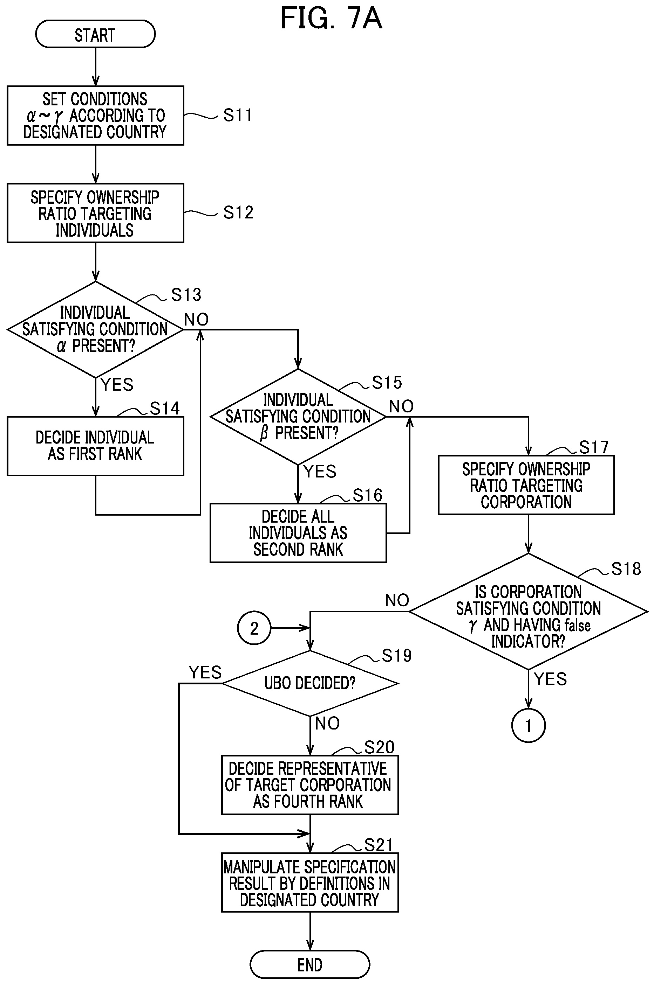

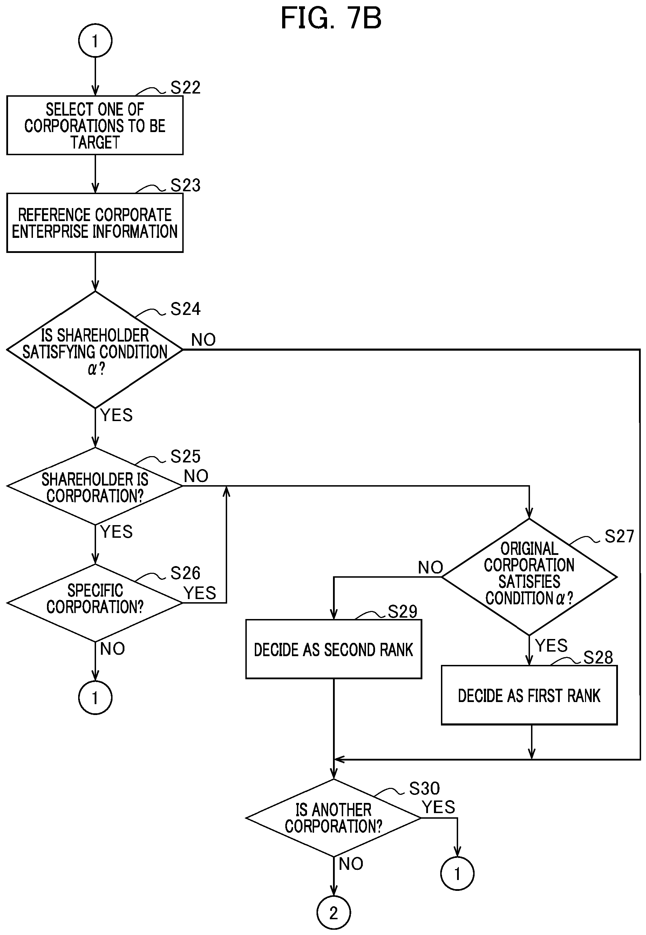

Fig. 7A and Fig. 7B are flowcharts showing examples of UBO specification processing. This UBO specification processing is an extracted portion executed by the UBO specification part 113 for specifying UBO of one target corporation, and shows an example of the flow of this portion. Herein, the UBO specification processing will be explained in detail by referencing Figs. 7A and 7B. It is assumed that the UBO specification part 113 executes processing as a main role.

The present service is configured so as to specify a UBO by dividing into a plurality of categories due to the strong influence of the UBO generally expected on corporations, and jointly specify a category to which this UBO belongs. In Fig. 7A and Fig. 7B, the category of UBO having the strongest influence is noted as "first rank", the category of UBO having the next strongest influence is noted as "second rank", and the category of UBO having the least influence is noted as "fourth rank", respectively.

In the case of the designated country being Japan, the UBO having an ownership ratio of shares exceeding 50%, for example, is classified in the first rank. The UBO having an ownership ratio of shares exceeding 25% and no more than 50%, for example, is classified in the second rank. A representative of a corporation, which has an ownership ratio of shares exceeding 25% but does not have a UBO classified into the first rank, is classified as UBO in the fourth rank. Individuals or corporations not directly owning shares of a target corporation may be defined as UBO in any of the categories.

First, in Step S11, the UBO specification part 113 reads out the condition information corresponding to a designated country from the condition information storage part 181, specifies UBO, and then sets the conditions α to γ. The set condition α is a condition which should be satisfied by UBO classified as the first rank. The condition β is a condition which should be satisfied by UBO classified as the second rank. The condition γ is a condition which should be satisfied by UBO classified as the second rank or higher. Accordingly, the condition γ corresponds to the lower limit in the condition β. In the present embodiment, the condition γ corresponds to the first condition and the condition α corresponds to the second condition, respectively.

In Step S12 subsequent to Step S11, the UBO specification part 113 references the file F3 and specifies an ownership ratio of each individual targeting individual owning shares of the target corporation. The specified ownership ratio includes the direct ownership ratio, indirect ownership ratio and actual ownership ratio, for example. In the following Step S13, the UBO specification part 113 determines whether an individual satisfying the condition α exists. When an individual satisfying the condition α exists, who has an ownership ratio of any shares exceeding 50%, for example, the determination in Step S13 is YES and the processing advances to Step S14, and this individual is decided as the first rank. Subsequently, the processing advances to Step ST15. On the other hand, when such an individual does not exist, the determination of Step S13 is NO and the processing advances to Step S15.

In Step S15, the UBO specification part 113 determines whether an individual satisfying the condition β exists. When one or more individuals satisfying the condition β exists, who has an ownership ratio of any shares of no more than 50% and exceeding 25%, for example, the determination of Step S15 is YES and the processing advances to Step S16, and all individuals satisfying the condition β are decided as the second rank. Subsequently, the processing advances to Step S17. On the other hand, in the case of no such individuals existing, the determination of Step S15 is NO, and the processing advances to Step S17.

In Step S17, the UBO specification part 113 references the file F3 and specifies an ownership ratio of each corporation, by targeting corporations owning shares of the target corporation. Herein, the specified ownership ratio is, for example, the direct ownership ratio.

In the following Step S18, the UBO specification part 113 determines whether a corporation exists, which satisfies the condition γ and has the beneficiary indicator of "False". This condition γ is a condition of the direct ownership ratio exceeding 25%, for example. In the case of a corporation satisfying this condition γ existing, the determination of Step S18 is YES, and the processing advances to Step S22 in Fig. 7B. In the case of such a corporation not existing, the determination of Step S18 is NO, and the processing advances to Step S19.

In Step S19, the UBO specification part 113 determines whether the UBO of the target corporation has been decided. The processing may advance to Step S19 after deciding an individual of the first rank in Step S14, and/or an individual of the second rank in Step S16. In this case, UBO has already been decided. Accordingly, in this case, the determination of Step S19 is YES, and the processing advances to Step S21. Otherwise the determination of Step S19 is NO and the processing advances to Step S20, since UBO has not been decided.

In Step S20, the UBO specification part 113 decides a representative of the target corporation as the fourth rank. In Step S21 following, the UBO specification part 113 manipulates the specification results for UBO with the definition of the designated country. Subsequently, the UBO specification processing ends. The UBO specification results are divided into e four cases when advancing to Step S21 including the execution of processing of steps described later. These four cases are: a fourth rank of a representative of target corporation (first case); second rank of at least one person (second rank); first rank of one person (third case); and second rank of one person and first rank of one person (fourth case). Herein, "person" represents an individual or a specific corporation. The specific corporation is a national or local public organization, or a corporation such as a listed corporate enterprise.

Among countries to be defined as designated countries, there are countries which do not differentiate between a first rank and a second rank. In such a country, a person decided as the first rank, and a person decided as the second rank are both set as UBO. Even in countries which differentiate between a first rank and a second rank, there are some countries in which a person decided as the first rank and a person decided as the second rank are both set as UBO. Japan is one of the countries which adopt the differentiation. However, only the person decided as the first rank is set as UBO in Japan.

When corporate enterprise information as shown in Fig. 6 is extracted with respect to a target corporation, "Taro Tokyo" is not set as UBO with the definition in Europe but is set as UBO with the definition in Japan, as described above. Even if the designated country is regardless of Europe or Japan, "Taro Tokyo" is decided as UBO when advancing to Step S21. However, when the designated country is Europe, "Taro Tokyo" is excluded from UBO due to the benefit rate. When no UBO other than "Taro Tokyo" exists, a representative of the target corporation is set as UBO. In order to realize such manipulation, the calculation of benefit rate in accordance with the definition of the designated country and manipulation according to the calculated benefit rate are performed as necessary in Step S21.

Since the definitions of UBO differ from country to country, the processing of Step S21 is executed, and the UBO specification results are manipulated as necessary in accordance with the definition in the designated country. By this manipulation, the final extraction of persons set as UBO with the definition in the designated country is performed, and the determination result of the extracted persons as UBO are converted in accordance with the definition in the designated country. When the designated country is Japan, only a person decided as the first rank is set as UBO in the fourth case. In the first to third cases, the manipulation to the specification results is not performed, and these specification results are maintained.

In Step S22 and later in Fig. 7B, the processing for tracing the capital ties of a target corporation and specifying UBO is performed. First, in Step S22, the UBO specification part 113 selects one among the corporations for which the determination in Step S18 is set as YES as a processing target. In the next Step S23, the UBO specification part 113 references the corporate enterprise information of the selected corporation. In Step S24 following, the UBO specification part 113 determines whether a shareholder satisfying the condition α exists in the selected corporation. In the case of such a shareholder existing, the determination of Step S24 is YES, and the processing advances to Step S25. In the case of such a shareholder not existing, the determination of Step S24 is NO, and the processing advances to Step S30. It should be noted that the corporate enterprise information referenced in Step S23 is stored in the file F3 in the present embodiment. However, this corporate enterprise information may alternatively be acquired from the Web server 3 as necessary. Accordingly, the corporate enterprise information may not necessarily be stored into a file to transmit or receive.

In Step S25, the UBO specification part 113 determines whether a shareholder satisfying the condition α is a corporation. When this shareholder is a corporation, in other words, the beneficiary indicator in the corporate enterprise information indicated by this shareholder is "False", the determination of Step S25 is YES, and the processing advances to Step S26. When this shareholder is an individual, the determination of Step S25 is NO and the processing advances to Step S27.

In Step S26, the UBO specification part 113 determines whether the shareholder is a specific corporation. When the shareholder is a specific corporation, the determination of Step S26 is YES and the processing advances to Step S27. When the shareholder is not a specific corporation, the determination of Step S26 is NO and the processing returns to Step S22 described above.

When the processing advances to Step S22 from Step S26 in this manner, a corporation satisfying the condition α among shareholders of the selected corporation, i.e. corporation for which determination in Step S24 is set as YES, is newly selected in Step S22. As a result of executing a processing loop formed in Steps S22 to S26 accordingly, it is possible to specify the individual or corporation which should be set as UBO, while tracing the capital ties from the target corporation. This processing loop ends by specifying the individual or corporation which should be set as UBO.

In Step S27, the UBO specification part 113 determines whether the corporation in selection among the corporations for which the determination in Step S18 was set as YES (noted as "original corporation" in Fig. 7B) satisfies the condition α. When the corporation in selection also satisfies the condition α, the determination of Step S27 is YES and the processing advances to Step S28. When the corporation in selection does not satisfy the condition α, the determination of Step S27 is NO and the processing advances to Step S29.

In addition to the determination of YES in Step S26, the processing advances to Step S27 according to the determination of NO in Step S25. For this reason, it is necessary for the UBO to be decided according to any among individuals and specific corporations. Accordingly, contents of the processing differ according to which of an individual and specific corporation it is in both Steps S28 and S29.

In Step S28, if it is an individual, the UBO specification part 113 decides this individual as the first rank. If it is a specific corporation, the UBO specification part 113 decides the corporation itself as the first rank. After this decision, the processing advances to Step S30. In Step S29, if it is an individual, the UBO specification part 113 decides this individual as the second rank. If it is a specific corporation, the UBO specification part 113 decides the corporation itself as the second rank. After this decision, the processing advances to Step S30.

In Step S30, the UBO specification part 113 determines whether another corporation for which capital ties should be traced exists. When a corporation, which is not selected as a processing target among corporations for which the determination in Step S18 was set as YES, still remains, the determination of Step S30 is YES and the processing returns to the above Step S22. Accordingly in Step S22, one corporation is selected from among the remaining corporations as different from a case of advancing from Step S26. On the other hand, when a corporation to be selected does not remain, the determination of Step S30 is NO and the processing advances to Step S19 in Fig. 7A. The reason for advancing to Step S19 is the possibility of a person determined as UBO not existing.

In this manner, the UBO specification part 113 also performs specification of UBO by tracing capital ties as necessary. In capitals ties as shown in Fig. 5, "Tokyo Taro" who invests capital into Kuki Co., Ltd. indirectly via Koga Shoji Co., Ltd. is also specified as UBO of the second rank in addition to "Saitama Ichiro" and "Chiba Jiro", accordingly.

"Tokyo Taro" is decided as the second rank in Step S29 due to not being set as YES for the determination in Step S15. This specification result is filed as file F4, and stored in the intermediate result storage part 182 secured in the storage unit 18. As the corporate enterprise code for the language expression of the designated country, the corporate enterprise code of Koga Shoji Co., Ltd. is specified in addition to the corporate enterprise code of Kuki Co., Ltd., and transferred to the information request part 114 together with the country code from the UBO specification part 113.

The information request part 114 transfers all corporate enterprise codes transferred from the UBO specification part 113 to the distribution part 111 together with the country code, and requests via the distribution part 111 the provision of the corresponding country-classified corporate enterprise information from the Web server 3 of the information providing company JK. When the target corporate enterprise is Kuki Co., Ltd.in which capital ties such as those shown in Fig. 5 exists, corporate enterprise codes transferred from the UBO specification part 113 are two corporate enterprise codes of Kuki Co., Ltd. and Koga Shoji Co., Ltd. This information request part 114 corresponds to a third acquisition unit in the present embodiment.

Receiving a request from the information request part 114, the Web server 3 performs a search with the received corporate enterprise codes as keys on the country-classified corporate enterprise information DBKK corresponding to the country codes, and extracts country-classified corporate enterprise information corresponding to the corporate enterprise codes. The country-classified corporate enterprise information extracted in this manner is filed as the file F5, which is sent to the AP server 1 from the Web server 3.

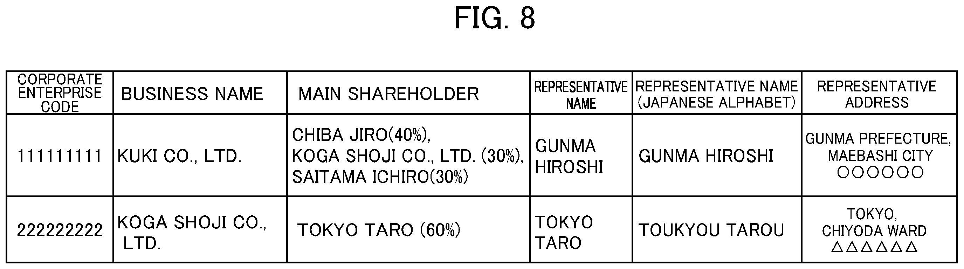

Fig. 8 shows an example of contents of the country-classified corporate enterprise information. It should be noted that this is one example and the example of contents of the country-classified corporate enterprise information is not limited to that shown in Fig. 8. This Fig. 8 shows an example of contents of country-classified corporate enterprise information combined into the file 5, when Kuki Co., Ltd. for which the capital ties as shown in Fig. 5 exist is the target corporation and the designated country is Japan. As shown in Fig. 8, the country-classified corporate enterprise information includes the respective information: corporate enterprise codes, company names, main shareholders, representative names, representative names (in Japanese alphabet), and representative addresses. Since the designated country is Japan, an entirety of information other than the corporate enterprise code is in Japanese expression.

Main shareholders in the country-classified corporate enterprise information each represent a name of shareholder and a direct ownership ratio for each of the main shareholders. The main shareholder is a shareholder having a possibility of being specified as UBO. By limiting to such shareholders, it is configured so as to restrict the amount of information regarding the main shareholders from becoming enormous. The direct ownership ratio is represented as information in parenthesis following the name.

As described above, a representative of the corporation may be specified as UBO. Accordingly, two types of representative name, and the representative address are included in the country-classified corporate enterprise information. The file F5 sent from the Web server 3 is received by the communication unit 19 and inputted into the CPU 11. As a result, the file F5 is transferred to the information request part 114 via the distribution part 111. The information request part 114 transfers the file F5 to the information input part 115 or notifies the existence thereof.

The information input part 115 references the files F4 and F5, specifies the language expression of the designated country corresponding to the specified UBO, and creates a screen (Web page) for confirmation of this specification result and correction. This screen is created according to the language (official language) of the designated country. In other words, this screen is created when the language of the designated country differs from the language of the corporate enterprise information. Although not particularly illustrated, for example, , the name (English notation) of the UBO extracted from the file F4, main shareholder (in which name, etc. of main shareholder are included) extracted from the file F5, and the two types of representative names, etc. are arranged in addition to the specification result of language expressions for each specified UBO on this screen. The specification result of the language expression is the name of the shareholder or representative name associated with the name (English expression) of the UBO. The name of the shareholder and representative name are both expressed in a language of the designated country. By arranging the specification results of the language expression, the names of UBO in other languages are automatically input on this screen. It should be noted that the specification results of the language expression are the two of kanji notation of the UBO and Japanese alphabet notation, for example, when the designated country is Japan.

After the creation of such a screen, the information input part 115 performs processing for notification to prompt confirmation of the language expression of the specified UBO, and publishes the specification result of UBO to be confirmed accessibly toward an employee using the processing-side terminal 2, for example. The information input part 115 thereby sends the created screen to the processing-side terminal 2 which requests access to the published specification results of UBO. The transmission of this screen is realized by transferring the screen and address of the processing-side terminal 2 from the information input part 115 to the distribution part 111, and causing the communication unit 19 to send the screen to this address.

The processing-side terminal 2 having received the screen sent in this manner displays the received screen on a display device. Accordingly, the employee confirms the language expression of UBO on a screen and corrects the language expression on an as-needed basis. The main shareholder and representative name in the language expression of the designated country arranged on the screen are candidates for the language expression to set the name of the UBO in the language of the designated country. For this reason, the employee can easily perform an appropriate confirmation of the specification result of the language expression and further perform an appropriate correction thereon. The reason for suppressing the amount of information arranged on the screen when the files F4 and F5 are extracted is to allow the employee to more easily perform appropriate confirmation and correction of the specification result. The contents of the screen on which correction was performed on an as-needed basis are sent from the processing-side terminal 2 to the AP server 1 according to a transmission instruction by the employee.

The contents of this screen are received by the communication unit 19 and inputted into the CPU 11. Accordingly, these contents are transferred to the information input part 115 via the distribution part 111. The information input part 115 creates a file F6 for combination with which the transferred contents are added to the file F4 and transfers the created file F6 to a combination part 116 or notifies the existence thereof.

It should be noted that the confirmation of the language expression and correction by the employee may be carried out by a file created in place of the screen. The specification of the language expression may not be carried out. That is to say, automatic input of the language expression in the designated country is not carried out, but it may be configured to allow an employee to input a full name of UBO. Even if configured as described above, the employee can easily input the appropriate language expression since candidates for the language expression to be applied to the name of UBO in the language of the designated country are arranged.

The combination part 116 performs combination to add the contents of the file F6 to the file F4. In this combination, the language expression which is not in a language of the designated country is replaced by the language expression of the designated country. For example, all information other than the corporate enterprise code is replaced by information of the language expression of the designated country. The company name in the country-classified corporate enterprise information is associated with the corporate enterprise code and updated as the company name stored as information in the file F4. The file F4 after such combination is stored in the specification result storage part 183 secured in the storage unit 18 as a file F2 for delivery. It should be noted that when it is not necessary to replace with the language expression of the designated country, namely the language of the corporate enterprise information DBKJ and the language of the designated country match with each other, the file F4 is set as the file F2.

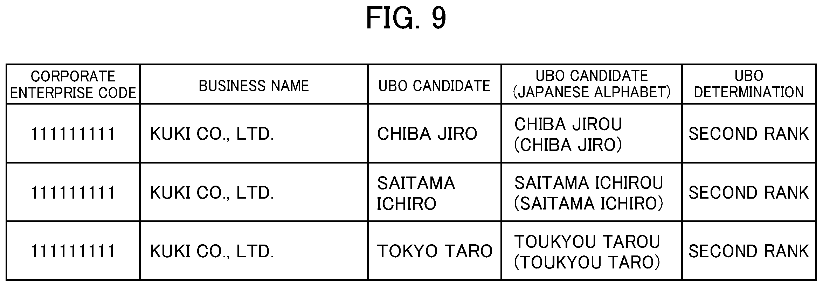

Fig. 9 is a view for explaining an example of contents of a file to be delivered. The contents shown in Fig. 9 are one example, and the example of contents of the file F2 which is to be delivered is not limited to that shown in Fig. 9. For example, it may be a file in which the company name and the name of UBO, etc. of the original file F4 remain. The file F2 whose example of contents is shown in Fig. 9 is for a case where Kuki Co., Ltd. having the capital ties as shown in Fig. 5 is a target corporation and a designated country is Japan, similarly to Fig. 8. As shown in Fig. 9, the file F2 is configured to show: a corporate enterprise code, company name, UBO candidate name, UBO candidate name (Japanese alphabet) and UBO determination result as the UBO information for each specified UBO.

The UBO determination result in the UBO information is information indicating a category classified as UBO belonging to. The two types of UBO candidate names of the kanji notation and Japanese alphabet notation are individual names, since a representative is specified as UBO in a case of a corporation. These two types of UBO candidate names are language expressions which require confirmation by the employee. The UBO candidate name of the Japanese alphabet expression in parentheses is the specified language expression, i.e. a language expression before correction by the employee. In Fig. 9, the language expression before correction is shown together. This makes it possible to confirm the correction contents of the language expression through the confirmation by the employee. It should be noted that the company name is not a target of confirmation by the employee since the company name is uniquely specifiable with a corporate enterprise code.

The output processing part 117 has a function to perform processing related to output of the file F2 stored in the specification result storage part 183. The employee using the processing-side terminal 2 can acquire any file F2 stored in the specification result storage part 183 from the AP server 1 by way of the output processing part 117. In addition, writing of the file F2 into a removable media 25, and output of the file F2 to the output unit 16 are also possible by way of the output processing part 117. This output processing part 117 corresponds to the output unit of the present embodiment.

It should be noted that UBO is divided into three categories, and specification of UBO is performed through the decision of a category to which the UBO belongs in the present embodiment. However, UBO specification may alternatively be performed according to benefit rate rather than decision of category. Even if the benefit rate differs from that of Europe in standard, it is possible to calculate by tracing capital ties from a target corporation. This benefit rate may be included in UBO information together with or instead of the decided category.

The country-classified corporate enterprise information is information with which it is possible to confirm a main shareholder of a corporation, as shown in Fig. 8. Accordingly, it may be configured so as to confirm the shareholders of a targeted corporation by referencing not only country-classified corporate-enterprise information but also corporate enterprise information in Step S22, when a case is assumed in which necessary information is lacked in corporate enterprise information. Accordingly, it may be configured so that the country-classified corporate enterprise information is acquired for confirmation of shareholders. If a main shareholder is a corporation, it may be configured so as to also add a corporate enterprise code to be confirmable.

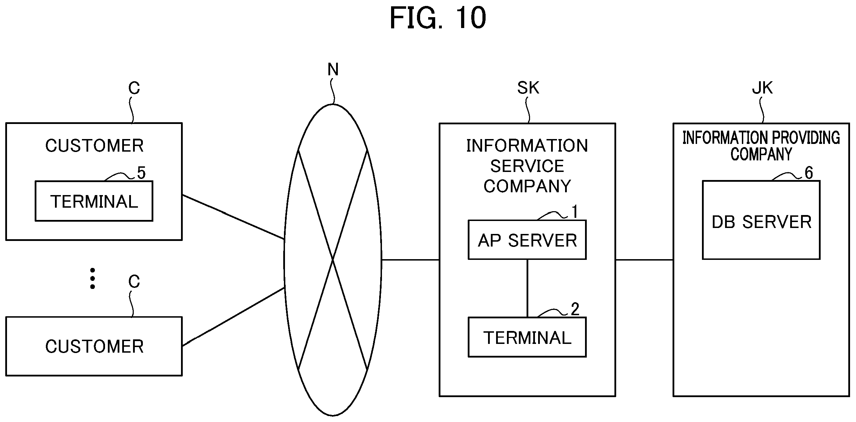

The present embodiment provides the service to an information providing company JK; however, it may be configured so as to provide this service to a customer C. As a method providing thereof, a method such as the following may be considered, for example. Fig. 10 is a diagram for explaining an example of a system constructed for the provision of a service by an AP server according to a modified example of one embodiment of the information processing device according to the present invention, and a network environment to which this system is connected.

As shown in Fig. 10, this modified example is for an information service company SK to provide the present service directly to a customer C. For this reason, an AP server 1 includes a function of a Web server, or a Web server interposed in the communication between a network N and the AP server 1 is present. Based on this, the AP server 1 includes at least two communication units 19. A processing-side terminal 2 is used in the application of a reception-side terminal 4. In order to provide the information required in the information service company SK, the information providing company JK is equipped with a DB server 6 in place of a Web server 3. By way of such a configuration, it is possible for the customer C to use a service similar to the present embodiment.

Corporate enterprise information DBKJ and country-classified corporate enterprise information DBKK may be prepared by the information service company SK. When it is configured in this manner, the information providing company JK becomes unnecessary. In addition, the required information of the corporate enterprise information DBKJ and country-classified corporate enterprise information DBKK may be acquired from a company or the like unrelated to the provision of a service to the customer C. In the present embodiment, an existing DB is only the corporate enterprise information DBKJ; however, there may be a plurality of existing DBs. A plurality of existing DBs may be obtained by one or more DB managed respectively by a plurality of companies, etc.

UBO specification must be performed in accordance with the definition of a designated country, and it is necessary to consider a benefit rate. With respect to the UBO specification processing shown as an example of flowchart in Figs. 7A and 7B the benefit rate calculated in accordance with the definition of Europe may be included in the corporate enterprise information. Accordingly, the UBO specification processing, which considers the importance of the definition in Japan, does not require a calculation of the benefit rate by the definition in Japan. In other words, it is so configured to specify the benefit rate in accordance with the definition in Japan and decide UBO during the flow of processing. As described above, the information required for calculating the benefit rate is present in the corporate enterprise information. Accordingly, the benefit rate information itself is not essential information, and the specification of the benefit rate is not limited to calculation. For this reason, the corporate enterprise information may not include benefit rate information. Accordingly, the UBO specification processing may be any of: processing with the condition that benefit rate information exists in the corporate enterprise information; processing which does not use beneficiary information in corporate enterprise information, namely does not depend on the presence or absence of beneficiary information in the corporate enterprise information; and processing which uses beneficiary information existing in the corporate enterprise information. When the benefit rate information does not exist, it may be configured so as to calculate a benefit rate in accordance with the definition of a country other than the designated country. In other words, there may be plural countries for which the benefit rate is calculated or specified. In the above embodiment, for example, it may be configured so as to calculate the benefit rate in Japan and Europe respectively. Whichever the case may be, it is necessary to specify the benefit rate in accordance with the definition of the designated country since UBO must be decided in accordance with the definition of the designated country.

### (Second Embodiment)

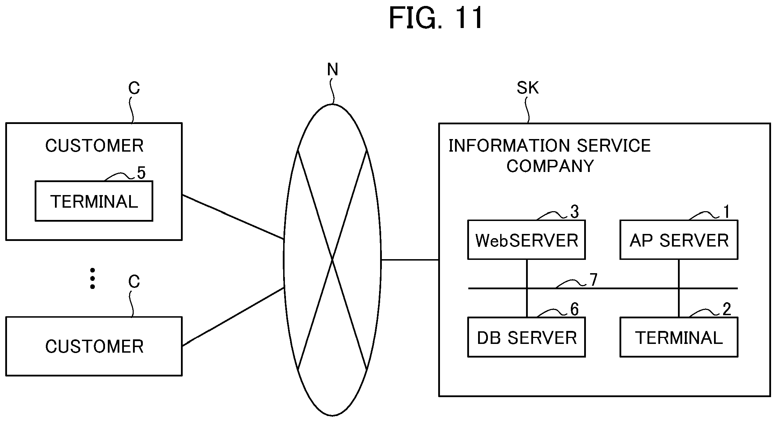

Fig. 11 is a diagram for explaining an example of a system constructed for the provision of a service by an AP server according to a second embodiment of an information processing device of the present invention, and a network environment to which this system is connected.

In the second embodiment, as shown in Fig. 11, an information service company SK itself is configured to perform processing of requests sent from a customer C as a request. Accordingly, the information service company SK differs from the above-mentioned first embodiment and solely provides the present service. In other words, the information service company SK performs processing of a request from a customer C, confirmation by an employee of a file F1 sent for the request, extraction of necessary information from each DB, and delivery of a file F2 to the customer C, etc. Accordingly, the information service company SK is equipped with a terminal 2, Web server 3 and DB server 6 in addition to the AP server 1, which are connected with each other by a network 7 such as a LAN.

The terminal 2, Web server 3 and DB server 6 are all used in the similar manner as described above, or have similar functions built therein. Accordingly, the same reference symbols are assigned to these. Herein, a detailed explanation which would be redundant is omitted. It should be noted that each node of the AP server 1, Web server 3 and DB server 6 may be established by a cloud service. Accordingly, the installation location and owner, etc. of each node are not particularly limited.

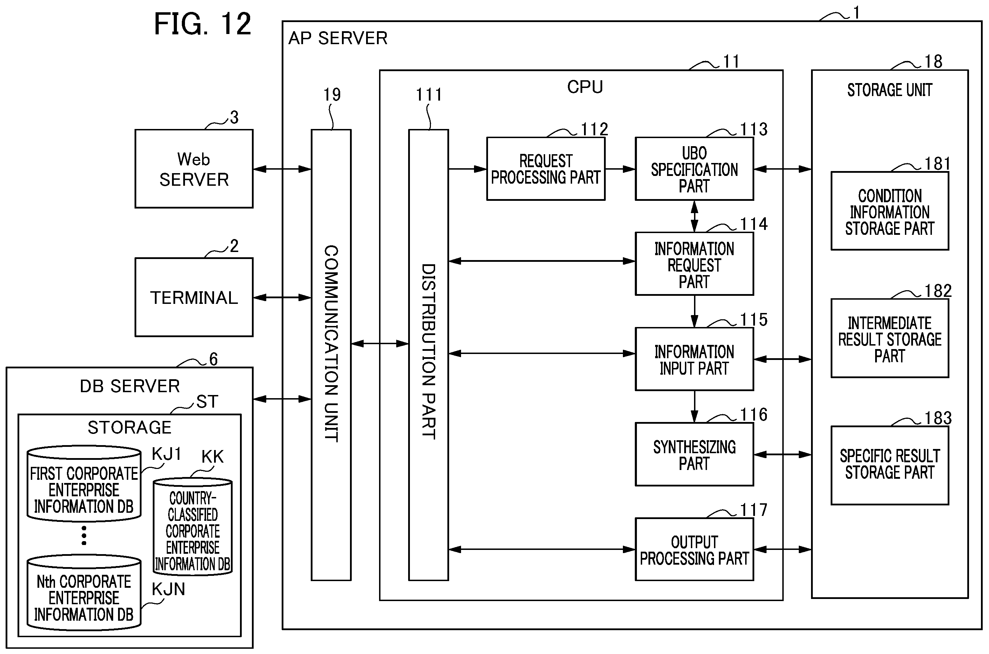

Fig. 12 is a functional block diagram showing an example of functional configuration realized on the AP server according to the second embodiment of the information processing device of the present invention. Next, an explanation focusing on differences from the AP server 1 of the above first embodiment will be provided with reference to Fig. 12. In the second embodiment, a storage ST shown in Fig. 1 is installed in the DB server 6, as shown in Fig. 12. In this storage ST, a first corporate enterprise information DBKJ1 to an Nth corporate enterprise information DBKJN are constructed in place of corporate enterprise information DBKJ in addition to country-classified corporate enterprise information DBKK,. Herein, N is an integer of two or more which is not limited particularly to a specific value.

This first corporate enterprise information DBKJ1 to Nth corporate enterprise information DBKJN are provided by a plurality of information companies, for example, and the corporate enterprise information is stored in each information DB KJ1 to KJN in accordance with the UBO definition in the assumed country. The contents of the corporate enterprise information stored in one record are the same or substantially the same.

The corporate enterprise information DBKJ that is used in the above first embodiment, for example, is e in accordance with the UBO definition in Europe, and the language being used is English. As mentioned above, the UBO definition is not the same in all countries. For example, the UBO definition in Europe differs from not only Japan, but also the United States of America. On the other hand, it is possible to invest directly in many countries. Accordingly, the present embodiment is configured to select a DB used in extraction of corporate enterprise information among the first corporate enterprise information DBKJ1 to Nth corporate enterprise information DBKJN and specify UBO. The second embodiment is configured to perform calculation of the benefit rate in accordance with the UBO definition as necessary similarly to the first embodiment, since there is a possibility of selecting a plurality of DBs having different definitions of UBO from among the first corporate enterprise information DBKJ1 to Nth corporate enterprise information DBKJN. Hereafter, "corporate enterprise information DBKJ" will be used to indicate any information DB among the first corporate enterprise information DBKJ1 to Nth corporate enterprise information DBKJN.

In the second embodiment, as shown in Fig. 12, the first corporate enterprise information DBKJ1 to Nth corporate enterprise information DBKJN are managed by the DB server 6. Accordingly, the AP server 1 acquires necessary corporate enterprise information from the DB server 6 on an as-needed basis. Acquisition of this corporate enterprise information is performed by an information request part 114. An information request part 114 generates a request for acquisition of the corporate enterprise information which a UBO specification part 113 designates with corporate enterprise code or the like, in accordance with an instruction given by the UBO specification part 113, and transfers the request to the distribution part 111.

This request is output from a CPU 11 to a communication unit 19, and is sent to the DB server 6. As a result, the DB server 6 extracts the corporate enterprise information designated by this request from the corresponding corporate enterprise information DBKJ, and sends the corporate enterprise information to the AP server 1. The corporate enterprise information received by the AP server 1 is output from the communication unit 19 to the CPU 11, transferred to the information request part 114 via the distribution part 111, and further transferred to the UBO specification part 113. Accordingly, in the second embodiment, the UBO specification part 113 controls the information request part 114 to acquire the required corporate enterprise information on an as-needed basis from the DB server 6 and perform UBO specification.

It is normal for each of the first corporate enterprise information DBKJ1 to Nth corporate enterprise information DBKJN to have a different range of coverage. This is because the research ability and researchable scope, etc. of information companies differ from each other, each of which provides any of the first corporate enterprise information DBKJ1 to Nth corporate enterprise information DBKJN. Since the scopes of coverage differ from one company to another, it may be possible to increase the ability to reference the required corporate enterprise information by switching the DBKJ referencing the corporate enterprise information among the first corporate enterprise information DBKJ1 to Nth corporate enterprise information DBKJN on an as-needed basis. This means that the possibility of being able to specify the UBO also becomes higher. By handling the differences in UBO definition according to country, UBO specification is appropriately performed as mentioned above. Accordingly, compared to the first embodiment, it is possible for the second embodiment to perform appropriate specification of the UBO at higher probability.

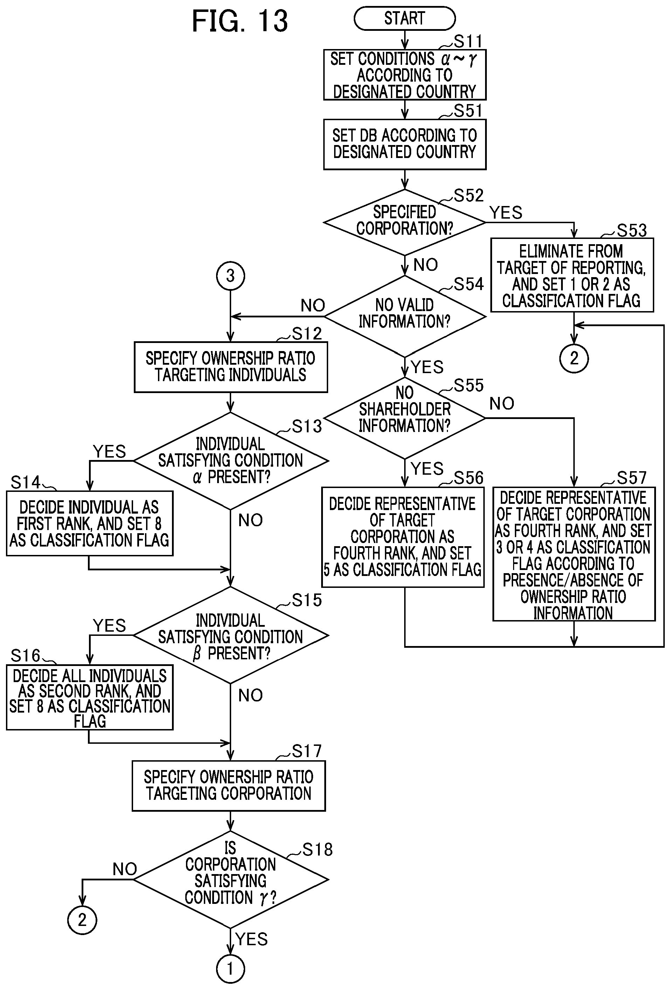

Figs. 13 to 15 are flowcharts showing an example of UBO specification processing in the second embodiment. Similarly to the first embodiment, the UBO specification processing extracts a portion to be executed by the UBO specification part 113 for UBO specification of one target corporation, and represents an example of the flow of processing of this portion. Herein, UBO specification processing in the second embodiment will be explained in detail by referencing Figs. 13 to 15. It is assumed that the UBO specification part 113 executes processing as a main role.

Also in the second embodiment, similarly to the first embodiment, the present service is configured so as to specify a UBO by dividing into a plurality of categories due to the strong influence of the UBO generally expected on corporations, and jointly specify a category to which this UBO belongs. In addition, the second embodiment is configured to save information representing the classification of UBO.

"Classification flag" noted in Figs. 13 to 15 is a variable prepared for saving the information. In Figs. 13 to 15, the same reference symbols are assigned to processing of which contents are the same as the first embodiment or basically the same. Accordingly, an explanation will be provided herein focusing on portions which differ from the first embodiment.

When a target corporation is a national or local government, 1 is assigned to the classification flag, and in case of a listed corporate enterprise, 2 is assigned thereto. When a representative of the target corporation as UBO, an integer value between 3 and 5 is assigned. More specifically, 3 is assigned to a representative who is specified as UBO with both shareholder information and ownership ratio information, , 4 is assigned to a represent who is specified as UBO without ownership ratio information but with shareholder information, , and 5 is assigned to a representative who is specified as UBO without shareholder information. In addition, tracing the capital ties, 6 is assigned to a national or local government which is specified as UBO, and 7 is assigned if what is specified as UBO is a listed corporate enterprise.

8 is assigned to an individual specified as the UBO. Accordingly, the value set to the classification flag corresponds to the specification result information in the second embodiment.

By assigning such a value to the classification flag and enabling this value to be confirmed, it is possible for the customer C to know the reasons why specified as UBO. When the value of the classification flag is 4 or 5, it may be possible that a corporation different from the specified UBO or an individual is an actual UBO. Accordingly, the classification flag serves as information representing the reliability of the specified UBO. The classification flag thereby becomes the information further raising the quality of the present service.

First, in Step S11, the UBO specification part 113 reads out the condition information corresponding to a designated country from a condition information storage part 181, and sets the conditions α to γ to specify UBO. Next, in Step S51, the UBO specification part 113 sets corporate enterprise information DBKJ to extract corporate enterprise information according to the designated country. If the designated country is Japan, for example, the UBO specification part 113 selects and sets the corporate enterprise information DBKJ constructed in accordance with the definition of UBO in Japan, from among the first corporate enterprise information DBKJ1 to Nth corporate enterprise information DBKJN.

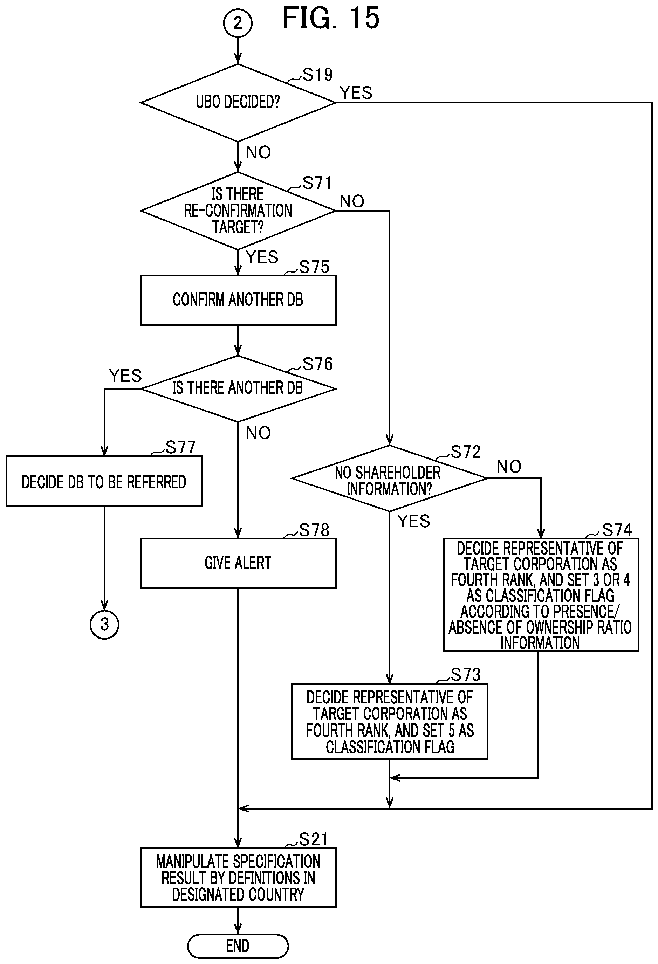

In the Step S52 following Step S51, the UBO specification part 113 determines whether the target corporation is a specific corporation. When the target corporation is a specific corporation, the determination of Step S52 is YES, and the processing advances to Step S53. When the target corporation is not a specific corporation, the determination of Step S52 is NO, and the processing advances to Step S54. In Step S53, the UBO specification part 113 decides that the target corporation is not a target for specifying UBO, and sets (assigns) 1 or 2 in the classification flag according to the target corporation. Subsequently, the processing advances to Step S19 in Fig. 15.

Accordingly, the second embodiment is configured to also handle target corporations which are specific corporations. Accordingly, the customer C may not necessarily confirm whether the target corporation is a specific corporation. Therefore, the burden of work for obtaining UBO information is further reduced for the customer C compared to the first embodiment.

In Step S54, the UBO specification part 113 determines whether there is valid information for tracing the capital ties of the target corporation in the corporate enterprise information DBKJ which has been set in Step S51. When no information indicating a necessity for tracing the capital ties of the target corporation exists or no information enabling tracing the capital ties of the target corporation exists in the corporate enterprise information DBKJ, the determination of Step S54 is YES, and the processing advances to Step S55. When the valid information to trace the capital ties of the target corporation exists, the determination of Step S54 is NO, and the processing advances to Step S12.

All the configurations of records of the selectable corporation enterprise information DBKJ may not necessarily be the same. Accordingly, the valid information changes according to the record configurations. More specifically, as shown in Fig. 6, the valid information is corporate enterprise information for which ownership ratio information exhibiting that at least the condition γ is satisfied and shareholder information exist, in the corporate enterprise information DBKJ from which the corporate enterprise information is extracted as one record for each shareholder in one target corporation. Corporate enterprise information is not regarded valid, which has: ownership ratio information not exhibiting that the condition γ is satisfied; and shareholder information. Corporation enterprise information is not regarded valid either, in which at least one of the shareholder information and ownership ratio information does not exist. On the other hand, in the corporate enterprise information DBKJ from which corporate enterprise information which is one target corporation is extracted as one record, and the beneficiary-related information for each shareholder exists in this corporate enterprise information, valid information is beneficiary-related information in which ownership ratio information indicating that at least the condition γ is satisfied and shareholder information exist. The beneficiary-related information is not regarded valid, which has: ownership ratio information not indicating that the condition γ is satisfied; and shareholder information . Beneficiary-related information is not regarded valid, for which at least one of shareholder information and ownership ratio information does not exist. Herein, it is assumed in order to avoid confusion that the corporate enterprise information (refer to Fig. 6) for which only one beneficiary-related information set exists in one record is stored in all of the selectable corporate enterprise information DBKJ. The record configuration of the selectable corporate enterprise information DBKJ is not particularly limited.

In Step S55, the UBO specification part 113 determines whether there is not shareholder information of the target corporation. When there is no corporate enterprise information having shareholder information of the target corporation and it not possible to specify shareholders, the determination of Step S55 is YES, and the processing advances to Step S56. When corporate enterprise information having shareholder information of the target corporation exists, the determination of Step S55 is NO, and the processing advances to Step S57.

In Step S56, the UBO specification part 113 decides the representative of the target corporation as the fourth rank, and sets 5 in the classification flag. Subsequently, the processing advances to Step S19 of Fig. 15. On the other hand, in Step S57, the UBO specification part 113 decides the representative of the target corporation as the fourth rank, and sets 3 or 4 as the classification flag according to the presence/absence of the ownership ratio information. As described above, when ownership ratio information exists in the corporate enterprise information, 3 is set as the classification flag, and when ownership ratio information does not exist in the corporate enterprise information, 4 is set as the classification flag. After setting the classification flag, the processing advances to Step S19 in Fig. 15.

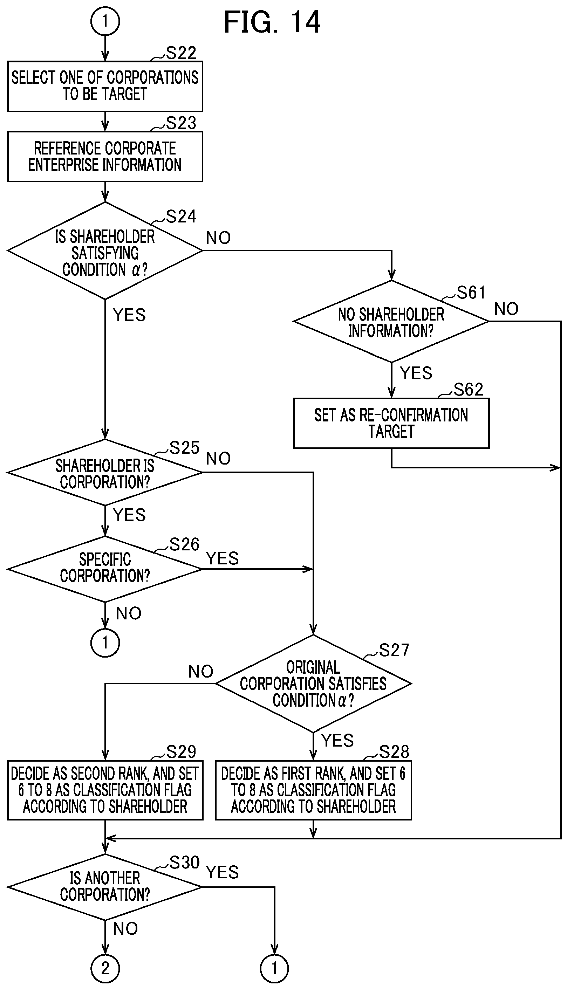

The respective processing contents of Step S12 advanced from Step S54 in which NO has been determined and Steps S13 to S18 are the same as the first embodiment, or substantially the same. However, since the UBO specification part 113 decides an individual as first rank or second rank in both Steps S14 and S16, the UBO specification part 113 sets 8 as the classification flag in both steps. In Step S18, the UBO specification part 113 performs determination of whether there is a corporation satisfying the condition γ. This is because the beneficiary indicator does not necessarily exist in the corporate enterprise information stored in the selected corporate enterprise information DBKJ. The differences from the first embodiment are basically only what have been described. In the second embodiment, when the determination in Step S18 is NO, the processing advances to Step S19 in Fig. 15, and when the determination in Step S18 is YES, the processing advances to Step S22 in Fig. 14.

In Steps S22 to S30 of Fig. 14, the following differ from the first embodiment. In the second embodiment, the AP server 1 is configured to acquire necessary corporate enterprise information from the DB server 6 on an as-needed basis. Accordingly, the reference of corporate enterprise information in Step S23 is performed by acquiring the corporate enterprise information of the corporation selected in Step S22 from the DB server 6. Acquisition of this corporate enterprise information is realized by causing the information request part 114 to generate a command including the corporate enterprise code of the corporation selected in Step S22, and sending the command to the DB server 6, for example.

In addition, in the second embodiment, when the determination in Step S24 is NO, the processing advances to Step S61. In Step S61, the UBO specification part 113 determines whether there is not shareholder information enabling to trace capital ties in the corporation selected in Step S22. If no shareholder information exists, or even if it does exist but lacks shareholder information for which the possibility of tracing capital ties exists, the determination of Step S61 is YES, and the processing advances to Step S62. When there is no lack of shareholder information, the determination of Step S61 is NO, and the processing advances to Step S30.

In Step S62, the UBO specification part 113 sets the corporation selected in Step S22 as a re-confirmation target. After setting this re-confirmation target, the processing advances to Step S30. Even if the shareholder information in the corporate enterprise information of the corporation selected in Step S22 does not exist in the corporate enterprise information stored in the corporate enterprise information DBKJ currently being set (selected), there is a possibility of existing in corporate enterprise information stored in another corporate enterprise information DBKJ. For this possibility, it is necessary to also confirm the corporate enterprise information stored in another corporate enterprise information DBKJ in order to perform UBO specification with higher precision. In the second embodiment, the corporation for which the corporate enterprise information stored in another corporate enterprise information DBKJ should be confirmed is controlled as a re-confirmation target. In this manner the corporation for which the corporate enterprise information stored in the other corporate enterprise information DBKJ should be confirmed is restricted.

In Steps S22 to S30 in Fig. 14, it is configured to further set any of 6 to 8 as the classification flag in Steps S28 and S29. Steps S28 and S29 may possibly be executed according to the determination of YES in Step S26. What is specified as UBO accordingly is any of an individual, national or local government, or listed corporate enterprise. Accordingly, in Steps S28 and S29, any of 6 to 8 is set as the classification flag.

In Steps S22 to S30 in Fig. 14, what has been described above differs from the first embodiment. Also in the second embodiment, when the determination of Step S30 is NO, the processing advances to Step S19 of Fig. 15. Next, the processing of Step S19 and later will be explained in detail. The processing advances to this Step S19, after execution of processing of Steps S53, S56 or S57. In Step S19, the UBO specification part 113 determines whether UBO of the target corporation has been decided. In the case of the UBO already been decided, the determination of Step S19 is YES, and the processing advances to Step S21. In the case of the UBO having been decided, the determination of Step S19 is YES, and the processing advances to Step S71.

In Step S71, the UBO specification part 113 determines whether there is a re-confirmation target which is unconfirmed. When a re-confirmation target which is unconfirmed exists, the determination of Step S71 is YES, and the processing advances to Step S75. When a re-confirmation target which is unconfirmed does not exist, the determination of Step S71 is NO, and the processing advances to Step S72.

Advancing to Step S72 indicates that e it is not possible for processing for specifying the UBO to continue. Accordingly, in Steps S72 to S74, similarly to the Steps S55 to S57 as described, processing is performed for deciding the representative of the target corporation as the fourth rank, and setting any of 3 to 5 as the classification flag according to the presence/absence of shareholder information, and further, the presence/absence of ownership ratio information. After finishing this processing, i.e. after execution of the processing of Step S73 or S74, the processing advances to Step S31.

Advancement to Step S55 is conditional on YES determined in Step S54. In contrast, advancement to Step S72 is conditional on NO determined in Step S54. Accordingly, the processing of Steps S72 to S74 is done assuming a case in which UBO to be decided as either of the first rank or the second rank is not specified, even when executing the processing of Step S12 and later.

On the other hand, in Step S75, the UBO specification part 113 performs confirmation of the corporate enterprise information DBKJ to be set in order to confirm the corporate enterprise information of the re-confirmation target. In Step S76 following, it is determined whether a corporate enterprise information DBKJ to be set exists. When corporate enterprise information DBKJ to be set exists, the determination of Step S76 is YES and the processing advances to Step S77, and the UBO specification part 113 decides and sets the corporate enterprise information DBKJ confirmed to exist as the DB serving as the target for reference. Subsequently, the processing returns to Step S12 in Fig. 13. Accordingly, UBO specification targeting the newly set corporate enterprise information DBKJ continues.

On the other hand, when the corporate enterprise information DBKJ to be set does not exist, the determination of Step S76 is NO and the processing advances to Step S77, and the UBO specification part 113 gives an alert expressing that it is not possible to specify UBO from the first corporate enterprise information DBKJ1 to Nth corporate enterprise information DBKJN. Subsequently, the processing advances to Step S21.

The alert given indicates that the corporate enterprise information necessary to specify the UBO is lacking. Accordingly, the given alert corresponds to warning information in the second embodiment. By giving such an alert, an employee of the information service company SK and the customer C know the reason why the UBO has not been specified.

The corporate enterprise information DBKJ to be set is corporate enterprise information DBKJ provided by the information company of one country in which the corporation which is set as the re-confirmation target was established, or a country having deep economic ties with the one country. Accordingly, the corporate enterprise information DBKJ to be set is specified for each re-confirmation target, and there may be cases where plural sets of corporate enterprise information DBKJ to be set exist. In addition, it may be possible that re-confirmation targets are set even for newly set corporate enterprise information DBKJ. Accordingly, it is configured to specify (search) UBO of the first rank or the second rank while switching the corporate enterprise information DBKJ referenced among the first corporate enterprise information DBKJ1 to Nth corporate enterprise information DBKJN on an as-needed basis in the second embodiment. The UBO specification ends in the case of setting UBO which is the first rank, second rank or fourth rank, or being confirmed that it is not possible to specify UBO. A case of being confirmed that it is not possible to specify the UBO means that it is confirmed that there is no corporate enterprise information DBKJ to be set prior to specifying UBO, i.e. a case of the determination of Step S76 being NO.

In Step S21, the UBO specification part 113 manipulates the specification results of UBO with the definition in the designated country. After saving the manipulated specification result, classification flag, given alert, etc. in the intermediate result storage part 182, the UBO specification processing ends.

As a result of the UBO specification part 113 executing such UBO specification processing, when UBO is successfully specified, the corporate enterprise code is transferred to the information request part 114 from the UBO specification part 113 similarly to the first embodiment. Accordingly, the information request part 114 generates a command for extracting the country-classified corporate enterprise information from the country-classified corporate enterprise information DBKK into the DB server 6 using the transferred corporate enterprise code and country code of the designated country. By sending this command to the DB server 6, the country-classified corporate enterprise information stored in the file F5 in the first embodiment is acquired from the DB server 6 in the second embodiment. The contents of processing from acquiring the country-classified corporate enterprise information until generating the file F2 are identical to the first embodiment, or substantially identical. Accordingly, an explanation of the contents of this processing, i.e. information input part 115, and synthesizing part 116, is omitted.

In the second embodiment, since the information providing company JK does not intervene between the customer C and information service company SK, it is configured not only to receive a request directly from the customer C, but also send the file F2 directly to the customer C. However, the reception of the request and sending of the file F2 to the customer C are both performed via the Web server 3. Accordingly, both the reception of the request and sending of the file F2 to the customer C are performed similarly to the first embodiment.

In the second embodiment, when there is corporate enterprise information for which the possibility of the shareholder information necessary to trace capital ties is lacking is considered, it is configured to set the corporation for which this corporate enterprise information has been created as a re-confirmation target and confirm corporate enterprise information of another corporate enterprise information DBKJ. Accordingly, in the second embodiment, it is configured to perform continuous setting of the corporation serving as the re-confirmation target until switching the set corporate enterprise information DBKJ, and confirm the corporate enterprise information of the corporation set as the re-confirmation target by switching the setting of the corporate enterprise information DBKJ.

However, the way of switching the setting of the corporate enterprise information DBKJ may not be limited thereto. For example, when it has been possible to confirm the existence of the corporation set as the re-confirmation target, it may be configured to confirm the corporate enterprise information of this corporation with another corporate enterprise information DBKJ and continue the specification of UBO according to this confirmation result. Accordingly, the corporate enterprise information DBKJ to be selected as referenceable may be configured to be multi-referenceable e, even if the corporate enterprise information DBKJ is switched. In the selection of referenceable corporate enterprise information DBKJ, rather than selecting according to the corporation set as the re-confirmation target, it may be configured to select irrespective of the corporation, and rather in accordance with a set sequence, for example. Accordingly, the method of selection of the corporate enterprise information DBKJ is not particularly limited.

The configuration of the corporate enterprise information stored in each corporate enterprise information DBKJ is not particularly limited, as mentioned above. In other words, the corporate enterprise information may be sufficient if including beneficiary-related information including beneficiary information, ownership ratio information and benefit rate information, as well as corporate enterprise identification information, for example. Accordingly, it may be configured to use a DB storing corporate enterprise information focusing on individuals in place of the corporate enterprise information DBKJ, or together with the corporate enterprise information DBKJ. Accordingly, it may be possible to adopt various modifications for the preparation of the DB, too.

In the second embodiment, an event of the corporate enterprise information required in the specification of UBO not existing is made confirmable by giving an alert; however, it may be made confirmable by a method other than giving an alert. For example, it may be made confirmable by a flag, message or the like. Accordingly, the way of generation of warning information may not be particularly limited. This may also apply to the classification flag. The value settable as the classification flag and number of these values, etc. are not particularly limited. Accordingly, it may be configured to prepare a plurality of classification flags and decide the type of information represented by each classification flag. Flags such as classification flags may be prepared to be sufficient for the number of information sets so as to be confirmable. Instead of setting the value of the classification flag, or together with setting of the value in the classification flag, it may be configured to perform decision (generation) of a message, or extraction of corporate enterprise information having the value set in the classification flag. Accordingly, the way of generating the specification result information and way of saving, etc. are not particularly limited.

### EXPLANATION OF REFERENCE NUMERALS

1 AP server
2, 4, 5 terminal
3 Web server
6 DB server
11 CPU
18 storage unit
111 distribution part
112 request processing part
113 UBO specification part
114 information request part
115 information input part
116 combination part
117 output processing part
C customer
JK information providing company
KJ corporate enterprise information DB
KK country-classified corporate enterprise information DB
SK information service company
ST storage

## Claims

1. An information processing device comprising:
a first acquisition unit (112) for acquiring corporate enterprise designation information (F1) which designates a first corporate enterprise that is a corporate enterprise to provide shareholding information, which is information of an ultimate beneficial owner;
a second acquisition unit (112) for acquiring, in addition to corporate enterprise identification information which is able to uniquely identify a target corporate enterprise which is a corporate enterprise serving as a target specified based on the corporate enterprise designation information (F1) acquired by the first acquisition unit (112), corporate enterprise information (F3) having beneficial ownership-related information which at least includes beneficial owner information expressing a beneficial owner of the target corporate enterprise, and ownership ratio information expressing an ownership ratio of shares of the target corporate enterprise by the beneficial owner;
a beneficial ownership rate specification unit (113) for specifying a beneficial ownership rate according to a definition of an assumed designated country, by referencing the corporate enterprise information (F3) acquired by the second acquisition unit (112);
an extraction unit (113) for specifying the beneficial owner that is the ultimate beneficial owner of the first corporate enterprise based on the corporate enterprise information (F3) acquired by the second acquisition unit (112) and a beneficial ownership rate specified by the beneficial ownership rate specification unit (113), and extracting at least part of the beneficial owner-related information (F4) corresponding to the beneficial owner specified as the beneficial owner information;
an output unit (117) for outputting the beneficial owner information extracted by the extraction unit (113); and
a third acquisition unit (114) capable of acquiring country-classified corporate enterprise information (F5) that at least includes, in addition to the corporate enterprise identification information of the target corporate enterprise, corporate enterprise name information and beneficial owner name information in which a corporate enterprise name which is a name of the target corporate enterprise, and a beneficial owner name which is a name of the beneficial owner of the target corporate enterprise are respectively expressed by a language which is an official language of an assumed country assumed to be one among countries having a possibility of being set as the designated country,
wherein the information processing device comprises an information input part (115) configured to specify a language expression of the designated country corresponding to the beneficial owner of the target corporate enterprise to create, according to the language of the designated country, a screen or file for confirmation of this specification result and correction, when the language of the designated country differs from the language of the corporate enterprise information, wherein, after the creation of such a screen or file, the information input part (115) performs processing for notification to prompt confirmation of the language expression of the specified beneficial owner of the target corporate enterprise and publishes the specification result of the ultimate beneficial owner to be confirmed and corrected, as needed, by an employee, and wherein the contents of the screen or file on which correction was performed on an as-needed basis are transferred to the information input part (115) for combination with the beneficial owner-related information (F4) by a combination part (116) comprised in the information processing device, in which combination a language expression which is not in a language of the designated country is replaced by the language expression of the designated country,
wherein the output unit (117), in a case of the corporate enterprise information being expressed in a language different from the language which is the official language of the designated country, and the designated country matching any of the assumed countries, outputs together with the beneficial ownership information at least part of the country-classified corporate enterprise information corresponding to the first corporate enterprise having the beneficial owner specified as the ultimate beneficial owner by the extraction unit (113).

2. The information processing device according to claim 1,
wherein the beneficial ownership rate specification unit (113) references the corporate enterprise information corresponding to the beneficial owner in a case of the beneficial owner being a corporation, and satisfying a first condition set from the definition of the designated country, and specifies a beneficial ownership rate according to a definition of the designated country, by confirming at least whether a beneficial owner satisfying a second condition set from the definition of the designated country exists in the corporation which is the beneficial owner.

3. The information processing device according to claim 1,
wherein, in a case of a plurality of sets of corporate enterprise information having different providers being acquirable by the second acquisition unit (112), the extraction unit (113) is capable of switching the corporate enterprise information selected from among a plurality of sets of the corporate enterprise information and perform specification of the beneficial owner that is the ultimate beneficial owner.

4. The information processing device according to claim 1,
wherein the extraction unit (113) generates warning information indicating that the corporate enterprise information is lacking, in a case of establishing that the corporate enterprise information required in specification of the beneficial owner that is the ultimate beneficial owner not existing among the corporate enterprise information acquirable by the second acquisition unit (112).

5. The information processing device according to any one of claims 1 to 4,
wherein the extraction unit (113), when specifying a corporation as the beneficial owner, generates specification result information expressing a result specifying the corporation as the beneficial owner.

## Patentansprüche

1. Informationsverarbeitungsvorrichtung, umfassend:
eine erste Erfassungseinheit (112) zum Erfassen von Unternehmensbezeichnungsinformationen (F1), die ein erstes Unternehmen bezeichnen, bei dem es sich um ein Unternehmen handelt, das Beteiligungsinformationen bereitstellt, wobei es sich um Informationen über einen letztendlichen wirtschaftlichen Berechtigten handelt;
eine zweite Erfassungseinheit (112) zum Erfassen, zusätzlich zu Unternehmensidentifizierungsinformationen, die ein Zielunternehmen eindeutig identifizieren kann, das ein Unternehmen ist, das als Ziel dient, welches auf der Grundlage der von der ersten Erfassungseinheit (112) erfassten Unternehmensbezeichnungsinformationen (F1) festgelegt wird, von Unternehmensinformationen (F3) mit Informationen in Relation zum wirtschaftlichen Berechtigten, die mindestens Informationen zum wirtschaftlichen Berechtigten, die einen wirtschaftlichen Berechtigten des Zielunternehmens angeben, und Informationen zum Eigentumsanteil, die einen Eigentumsanteil an den Anteilen des Zielunternehmens von dem wirtschaftlichen Berechtigten angeben, beinhalten;
eine Einheit zur Festlegung der wirtschaftlichen Eigentumsquote (113), die unter Bezugnahme auf die von der zweiten Erfassungseinheit (112) erfassten Unternehmensinformationen (F3) eine wirtschaftliche Eigentumsquote gemäß einer Definition eines angenommenen designierten Landes festlegt;
eine Extraktionseinheit (113) zum Festlegen des wirtschaftlichen Berechtigten, der der letztendliche wirtschaftliche Berechtigte des ersten Unternehmens ist, auf der Grundlage der von der zweiten Erfassungseinheit (112) erfassten Unternehmensinformationen (F3) und einer wirtschaftlichen Eigentumsquote, die von der Einheit zur Festlegung der wirtschaftlichen Eigentumsquote (113) angegeben wird, und zum Extrahieren zumindest eines Teils der Informationen in Relation zum wirtschaftlichen Berechtigten (F4), die dem wirtschaftlichen Berechtigten entsprechen, die als Information zum wirtschaftlichen Berechtigten festgelegt wird;
eine Ausgabeeinheit (117) zum Ausgeben der von der Extraktionseinheit (113) extrahierten Informationen zum wirtschaftlichen Berechtigten; und
eine dritte Erfassungseinheit (114), die in der Lage ist, nach Ländern klassifizierte Unternehmensinformationen (F5) zu erfassen, die zusätzlich zu den Unternehmensidentifikationsinformationen des Zielunternehmens mindestens Informationen zum Unternehmensnamen und Informationen zum Namen des wirtschaftlich Berechtigten beinhalten, wobei ein Unternehmensname, der der Name des Zielunternehmens ist, und ein Name des wirtschaftlich Berechtigten, der der Name des wirtschaftlich Berechtigten des Zielunternehmens ist, jeweils in einer Sprache ausgedrückt sind, die eine Amtssprache eines angenommenen Landes ist, von dem angenommen wird, dass es zu den Ländern gehört, die als das designierte Land festgelegt werden können,
wobei die Informationsverarbeitungsvorrichtung ein Informationseingabeteil (115) umfasst, das so konfiguriert ist, dass es einen sprachlichen Ausdruck des designierten Landes entsprechend dem wirtschaftlichen Berechtigten des Zielunternehmens festlegt, um entsprechend der Sprache des designierten Landes einen Bildschirm oder eine Datei zur Bestätigung dieses Festlegungsergebnisses und zur Korrektur zu erstellen, wenn die Sprache des designierten Landes von der Sprache der Unternehmensinformationen abweicht, wobei nach der Erstellung eines solchen Bildschirms oder einer solchen Datei das Informationseingabeteil (115) eine Verarbeitung zur Benachrichtigung durchführt, um die Bestätigung des sprachlichen Ausdrucks des angegebenen wirtschaftlichen Berechtigten des Zielunternehmens anzufordern, und das Ergebnis der Angabe des letztendlichen wirtschaftlichen Berechtigten veröffentlicht, um gegebenenfalls von einem Mitarbeiter bestätigt und korrigiert zu werden, und wobei der Inhalt des Bildschirms oder der Datei, an dem bzw. der bei Bedarf Korrekturen vorgenommen wurden, an das Informationseingabeteil (115) transferiert wird zur Kombination mit den Informationen in Relation zum wirtschaftlichen Berechtigten (F4) durch ein Kombinationsteil (116), das in der Informationsverarbeitungsvorrichtung enthalten ist, wobei bei dieser Kombination ein sprachlicher Ausdruck, der nicht in einer Sprache des designierten Landes vorliegt, durch eine sprachlichen Ausdruck des designierten Landes ersetzt wird,
wobei die Ausgabeeinheit (117) in dem Fall, dass die Unternehmensinformationen in einer Sprache ausgedrückt sind, die sich von der Sprache unterscheidet, die die Amtssprache des designierten Landes ist, und das designierte Land mit einem der angenommenen Länder übereinstimmt, zusammen mit den Informationen zum wirtschaftlichen Berechtigten zumindest einen Teil der nach Ländern klassifizierten Unternehmensinformationen ausgibt, die dem ersten Unternehmen mit dem wirtschaftlichen Berechtigten entsprechen, der von der Extraktionseinheit (113) als der letztendliche wirtschaftliche Berechtigte angegeben wurde.

2. Informationsverarbeitungsvorrichtung nach Anspruch 1,
wobei die Einheit zur Festlegung der wirtschaftlichen Eigentumsquote (113) auf die Unternehmensinformationen Bezug nimmt, die dem wirtschaftlichen Berechtigten entsprechen, wenn der wirtschaftliche Berechtigte eine Kapitalgesellschaft ist und eine erste Bedingung erfüllt, die aus der Definition des designierten Landes festgelegt wird, und eine wirtschaftliche Eigentumsquote gemäß einer Definition des designierten Landes festlegt, indem sie zumindest bestätigt, ob ein wirtschaftlicher Berechtigter, der eine zweite Bedingung erfüllt, die aus der Definition des designierten Landes festgelegt wird, die in der Kapitalgesellschaft vorhanden ist, die der wirtschaftliche Berechtigte ist.

3. Informationsverarbeitungsvorrichtung nach Anspruch 1,
wobei in einem Fall, in dem mehrere Sätze von Unternehmensinformationen mit unterschiedlichen Anbietern durch die zweite Erfassungseinheit (112) erfassbar sind, die Extraktionseinheit (113) in der Lage ist, die Unternehmensinformationen, die aus einer Vielzahl von Sätzen von Unternehmensinformationen ausgewählt sind, zu wechseln und eine Festlegung des wirtschaftlichen Berechtigten, der der letztendliche wirtschaftliche Berechtigte ist, durchzuführen.

4. Informationsverarbeitungsvorrichtung nach Anspruch 1,
wobei die Extraktionseinheit (113) eine Warnmeldung generiert, die darauf hinweist, dass die Unternehmensinformationen fehlen, wenn festgestellt wird, dass die Unternehmensinformationen, die für die Festlegung des wirtschaftlichen Berechtigten, d. h. des letztendlichen wirtschaftlichen Berechtigten, erforderlich sind, nicht in den Unternehmensinformationen enthalten sind, die von der zweiten Erfassungseinheit (112) erfasst werden können.

5. Informationsverarbeitungsvorrichtung nach einem der Ansprüche 1 bis 4,
wobei die Extraktionseinheit (113) bei der Angabe einer Kapitalgesellschaft als wirtschaftlichen Berechtigten eine Angabe-Ergebnisinformation erzeugt, die ein Ergebnis ausdrückt, bei dem die Kapitalgesellschaft als der wirtschaftliche Berechtigte angegeben wird.

## Revendications

1. Dispositif de traitement d'informations comportant :
une première unité d'acquisition (112) pour l'acquisition d'informations de désignation d'entreprise constituée en société (F1) qui désignent une première entreprise constituée en société qui est une entreprise constituée en société pour fournir des informations de participation, qui sont des informations d'un propriétaire bénéficiaire ultime ;
une deuxième unité d'acquisition (112) pour l'acquisition, en plus d'informations d'identification d'entreprise constituée en société qui sont aptes à identifier de manière unique une entreprise constituée en société cible qui est une entreprise constituée en société servant de cible spécifiée sur la base des informations de désignation d'entreprise constituée en société (F1) acquises par la première unité d'acquisition (112), d'informations d'entreprise constituée en société (F3) ayant des informations relatives à la propriété bénéficiaire qui incluent au moins des informations de propriétaire bénéficiaire exprimant un propriétaire bénéficiaire de l'entreprise constituée en société cible, et des informations de taux de propriété exprimant un taux de propriété d'actions de l'entreprise constituée en société cible par le propriétaire bénéficiaire ;
une unité de spécification de taux de propriété bénéficiaire (113) pour la spécification d'un taux de propriété bénéficiaire selon une définition d'un pays désigné supposé, en faisant référence aux informations d'entreprise constituée en société (F3) acquises par la deuxième unité d'acquisition (112) ;
une unité d'extraction (113) pour la spécification du propriétaire bénéficiaire qui est le propriétaire bénéficiaire ultime de la première entreprise constituée en société sur la base des informations d'entreprise constituée en société (F3) acquises par la deuxième unité d'acquisition (112) et d'un taux de propriété bénéficiaire spécifié par l'unité de spécification de taux de propriété bénéficiaire (113), et l'extraction d'au moins une partie des informations relatives au propriétaire bénéficiaire (F4) correspondant au propriétaire bénéficiaire spécifié comme étant les informations de propriétaire bénéficiaire ;
une unité de sortie (117) pour la sortie des informations de propriétaire bénéficiaire extraites par l'unité d'extraction (113) ; et
une troisième unité d'acquisition (114) capable d'acquérir des informations d'entreprise constituée en société classées par pays (F5) qui incluent au moins, en plus des informations d'identification d'entreprise constituée en société de l'entreprise constituée en société cible, des informations de nom d'entreprise constituée en société et des informations de nom de propriétaire bénéficiaire dans lesquelles un nom d'entreprise constituée en société qui est un nom de l'entreprise constituée en société cible, et un nom de propriétaire bénéficiaire qui est un nom du propriétaire bénéficiaire de l'entreprise constituée en société cible, sont respectivement exprimés par une langue qui est une langue officielle d'un pays supposé qui est supposé être l'un parmi des pays ayant la possibilité d'être établi comme étant le pays désigné,
dans lequel le dispositif de traitement d'informations comporte une partie d'entrée d'informations (115) configurée pour spécifier une expression linguistique du pays désigné correspondant au propriétaire bénéficiaire de l'entreprise constituée en société cible pour créer, selon la langue du pays désigné, un écran ou un fichier pour la confirmation de ce résultat de spécification et de cette correction, lorsque la langue du pays désigné diffère de la langue des informations de l'entreprise constituée en société, dans lequel, après la création d'un tel écran ou fichier, la partie d'entrée d'informations (115) réalise un traitement de notification pour inviter à la confirmation de l'expression linguistique du propriétaire bénéficiaire spécifié de l'entreprise constituée en société cible et publie le résultat de spécification du propriétaire bénéficiaire ultime à confirmer et à corriger, si nécessaire, par un employé, et dans lequel les contenus de l'écran ou du fichier sur lequel la correction a été réalisée si nécessaire sont transférés à la partie d'entrée d'informations (115) pour une combinaison avec les informations relatives au propriétaire bénéficiaire (F4) par une partie de combinaison (116) comprise dans le dispositif de traitement d'informations, dans laquelle combinaison une expression linguistique qui n'est pas dans une langue du pays désigné est remplacée par l'expression linguistique du pays désigné,
dans lequel l'unité de sortie (117), dans un cas où les informations d'entreprise constituée en société sont exprimées dans une langue différente de la langue qui est la langue officielle du pays désigné, et le pays désigné concordant avec l'un quelconque des pays supposés, délivre en sortie, conjointement avec les informations de propriété bénéficiaire, au moins une partie des informations d'entreprise constituée en société classées par pays correspondant à la première entreprise constituée en société ayant le propriétaire bénéficiaire spécifié comme étant le propriétaire bénéficiaire ultime par l'unité d'extraction (113).

2. Dispositif de traitement d'informations selon la revendication 1,
dans lequel l'unité de spécification de taux de propriété bénéficiaire (113) fait référence aux informations d'entreprise constituée en société correspondant au propriétaire bénéficiaire dans un cas où le propriétaire bénéficiaire est une société, et satisfaisant à une première condition établie d'après la définition du pays désigné, et spécifie un taux de propriété bénéficiaire selon une définition du pays désigné, par la confirmation au moins de si un propriétaire bénéficiaire satisfaisant à une deuxième condition établie d'après la définition du pays désigné existe dans la société qui est le propriétaire bénéficiaire.

3. Dispositif de traitement d'informations selon la revendication 1,
dans lequel, dans le cas où une pluralité d'ensembles d'informations d'entreprise constituée en société ayant différents fournisseurs sont aptes à être acquis par la deuxième unité d'acquisition (112), l'unité d'extraction (113) est capable de commuter les informations d'entreprise constituée en société sélectionnées parmi une pluralité d'ensembles des informations d'entreprise constituée en société et réaliser la spécification du propriétaire bénéficiaire qui est le propriétaire bénéficiaire ultime.

4. Dispositif de traitement d'informations selon la revendication 1,
dans lequel l'unité d'extraction (113) génère des informations d'avertissement indiquant que les informations d'entreprise constituée en société sont manquantes, dans le cas où il est établi que les informations d'entreprise constituée en société requises dans la spécification du propriétaire bénéficiaire qui est le propriétaire bénéficiaire ultime n'existent pas parmi les informations d'entreprise constituée en société aptes à être acquises par la deuxième unité d'acquisition (112).

5. Dispositif de traitement d'informations selon l'une quelconque des revendications 1 à 4,
dans lequel l'unité d'extraction (113), lors de la spécification d'une société comme étant le propriétaire bénéficiaire, génère des informations de résultat de spécification exprimant un résultat spécifiant la société comme étant le propriétaire bénéficiaire.
